# EUROPEAN PATENT APPLICATION

(11) **EP 1 630 140 A1**
(43) Date of publication of application: **01.03.2006**
(21) Application number: 04729768.4
(22) Date of filing: 27.04.2004
(51) Int. Cl.: C03B 33/033, B28D 5/00, B23K 26/38

(54) **BRITTLE BOARD DIVIDING SYSTEM AND BRITTLE BOARD DIVIDING METHOD**

(30) Priority: 28.04.2003 JP 2003124501
(71) Applicant: Mitsuboshi Diamond Industrial Co., Ltd., Suita-shi, Osaka 564-0044 (JP)
(72) Inventor: OTODA, Kenji Mituboshi Diamond Industrial Co. Ltd., Osaka 5640044 (JP); INOUE, S. Mituboshi Diamond Industrial Co. Ltd., Osaka 5640044 (JP)
(74) Representative: TBK-Patent
(86) International application number: PCT/JP2004/006103
(87) International publication number: WO 2004/096721

(57) **Abstract**

A brittle substrate cutting system according to the present invention includes a scribing apparatus including a scribing line forming means for forming a scribing line on a first surface of a brittle substrate; and a breaking apparatus for breaking the brittle substrate along the scribing line, wherein the breaking apparatus includes a first pressing controlling means for moving a pressing force upon a second surface of the brittle substrate opposing the first surface of the brittle substrate along the scribing line while the first surface of the brittle substrate is held.

## Description

### TECHNICAL FIELD

The present invention relates to a brittle substrate cutting system and a brittle substrate cutting method for cutting a brittle substrate by forming a scribing line on the brittle substrate and breaking the brittle substrate along the scribing line.

### BACKGROUND ART

A display apparatus includes a flat display panel (e.g., a liquid crystal panel, a plasma display panel, an organic EL display panel). The flat display panel is manufactured by bonding two brittle substrates (e.g., two glass substrates). When a display panel is manufactured, a brittle substrate needs to be cut into a predetermined size. Generally, a scribe line is formed on the brittle substrate (scribing step), and next the brittle substrate is broken along the scribe line formed (breaking step), thereby the brittle substrate being cut.

WO02/057192 A1 discloses a cutting apparatus in which a pair of cutting heads, each head opposing each other on an upper side and a lower side, is provided. Each of the pair of cutting heads includes a cutter wheel for forming a scribing line on a glass substrate and a roller which presses and rolls on the glass substrates in parallel with the scribing line formed by the cutter wheel. The cutting apparatus cuts a bonded substrate which is manufactured by bonding the pair of glass substrates.

The cutting apparatus disclosed in the publication rotates the roller of each cutting head provided on the upper side and the lower side while each roller is pressed against both sides of the scribing line to exert a shearing stress (a bending moment) with respect to the scribing line on each glass substrate after a scribing line is formed simultaneously by a cutter wheel of each cutting head on each glass substrate, which constitutes a bonded substrate. In this manner, each glass substrate is cut.

In the cutting apparatus described in the publication, the bending moment works such that a vertical crack extending right below (right above) the scribing line formed on the respective glass substrates extends in the thickness direction of the glass substrates. However, the bending moment does not exert a sufficient shearing force with respect to each scribing line. Thus, when a vertical crack constituting the scribing line formed on each glass substrate is shallow, there is a possibility that each glass substrate may not be accurately cut.

When a side edge portion of the glass substrate is cut, the cut side edge portion droops since the cut side edge portion is not held. An unnecessary force is applied to the glass substrate during the cutting process by the drooped side edge portion. Therefore, there is a possibility that the substrate is cut in an oblique direction with respect to the scribing line. There is also a possibility that chippings, fractures, etc may occur at an end face when the cut side edge portion contacts the end face which is the cut portion of the glass substrate.

The present invention is made in view of such problems. The objective thereof is to provide a brittle substrate cutting system and a brittle substrate cutting method for efficiently cutting a brittle substrate without chippings in the brittle substrate and fractures, etc in the brittle substrate.

### DISCLOSURE OF THE INVENTION

A brittle substrate cutting system according to the present invention includes a scribing apparatus including a scribing line forming means for forming a scribing line on a first surface of a brittle substrate; and a breaking apparatus for breaking the brittle substrate along the scribing line, wherein the breaking apparatus includes a first pressing controlling means for moving a pressing force upon a second surface of the brittle substrate opposing the first surface of the brittle substrate along the scribing line while the first surface of the brittle substrate is held, thereby the above-described objective of the present invention being achieved.

According to a brittle substrate cutting system of the present invention, a pressing force upon a second surface of the brittle substrate is moved along the scribed line formed on a first surface of the brittle substrate while the first surface of the brittle substrate is held, this second surface opposing the first surface of the brittle substrate. In this manner, while the pressing force along the scribing line formed on the first surface of the brittle substrate, the pressing force is applied to the second surface of the brittle substrate, this second surface opposing the first surface of the brittle substrate. Therefore, a bending moment is applied to the brittle substrate such that a vertical crack extending from the scribing line positively extends in the thickness direction of the substrate to cut the brittle substrate.

According to a brittle substrate cutting system of the present invention, the breaking apparatus may further includes: a pressing means for pressing the second surface of the brittle substrate; and a first holding means for holding the first surface of the brittle substrate, wherein the first pressing controlling means may control the pressing means such that the pressing means moves along the scribing line while the first holding means and the pressing means oppose each other with the brittle substrate therebetween.

According to a brittle substrate cutting system of the present invention, a pressing means is moved along the scribing line formed on the first surface of the brittle substrate while a first holding means holds a first surface of the brittle substrate and the pressing means presses a second surface of the brittle substrate. Therefore, a pressing force is applied along the scribing line of the second surface of the brittle substrate, this second surface opposing the first surface of the brittle substrate on which the scribing line is formed. As a result, a bending moment is applied to the brittle substrate such that a vertical crack extending from the scribing line positively extends in the thickness direction of the substrate to cut the brittle substrate.

According to a brittle substrate cutting system of the present invention, the first pressing controlling means controls the pressing means such that the pressing means rolls along the scribing line.

The first controlling means readily moves along the scribing line since the first pressing controlling means controls the pressing means such that the pressing means rolls along the scribing line.

According to a brittle substrate cutting system of the present invention, the pressing means may be a roller.

Since a roller is used as the pressing means the first pressing controlling means readily rotates the pressing means along the scribing line.

According to a brittle substrate cutting system of the present invention, the pressing means may be a conveyor.

Since a conveyor is used as the pressing means the first pressing controlling means readily rotates the pressing means along the scribing line.

According to a brittle substrate cutting system of the present invention, the pressing means may be a bearing.

Since a bearing is used as the pressing means the first pressing controlling means readily rotates the pressing means along the scribing line.

According to a brittle substrate cutting system of the present invention, a groove section may be formed in the pressing means such that the pressing means does not contact with a line on the second surface of the brittle substrate, the line opposing the scribing line.

When the brittle substrate is cut along the scribing line, the pressing means holds both sides of the line of the second surface of the brittle substrate so as not to contact with the line on the second surface of the brittle substrate, this line opposing the scribing line. Therefore, occurrence of chippings at the cut face portion is prevented during the cutting process.

According to a brittle substrate cutting system of the present invention, the breaking apparatus may further include a first holding controlling means for controlling the first holding means such that the first holding means moves along the scribing line while the first holding means and the pressing means oppose each other with the brittle substrate therebetween.

The first pressing controlling means moves the pressing means along the scribing line and the first holding controlling means moves the first holding means along the scribing line to sequentially cut the brittle substrate from one end face of the.brittle substrate to the other end face of the brittle substrate while the first holding means and the pressing means oppose each other with brittle substrate therebetween. Therefore, the brittle substrate is cut without forming a plurality of starting points of cutting. As a result, a cut face is formed without having unevenness on the brittle substrate.

According to a brittle substrate cutting system of the present invention, the first holding controlling means may control the first holding means such that the first holding means rolls along the scribing line.

Since the first holding means controls the first holding means so as to roll along the scribing line, the first holding controlling means readily moves the first holding means along the scribing line.

According to a brittle substrate cutting system of the present invention, the holding means may be a roller.

Since the roller is used as the first holding means, the first holding controlling means readily rotates the first holding means along the scribing line.

According to a brittle substrate cutting system of the present invention, the holding means may be a conveyor.

Since the conveyor is used as the first holding means, the first holding controlling means readily rotates the first holding means along the scribing line.

According to a brittle substrate cutting system of the present invention, the holding means may be a bearing.

Since the bearing is used as the first holding means, the first holding controlling means readily rotates the first holding means along the scribing line.

According to a brittle substrate cutting system of the present invention, a groove section may be formed in the holding means such that the first holding means does not contact with the scribing line.

When the brittle substrate is cut along the scribing line, the first holding means holds both sides of the scribing line so as not to contact with the scribing line. Therefore, occurrence of chippings at the cut face portion is prevented during the cutting process.

According to a brittle substrate cutting system of the present invention, the width of the groove section formed in the first holding means may be larger than that of the pressing means.

The brittle substrate is positively cut since a portion of the pressing means goes under the first holding means, so that the brittle substrate is likely to bend.

According to a brittle substrate cutting system of the present invention, the pressing means may further include a second holding means and a third holding means for moving along the scribing line in a first direction and for holding the brittle substrate, the second holding means and the third holding means being arranged in the first direction from the pressing means, and the breaking apparatus may further include a second holding controlling means for controlling the second holding means such that the second holding means moves on the first surface along the scribing line while the second holding means holds the brittle substrate, and controlling the third holding means such that the third holding means moves on the second surface along the scribing line while the third holding means holds the brittle substrate.

The holding means is moved along the scribing line while holding the uncut portions of the area on which the scribing line is formed, thereby preventing an unnecessary force being applied to the areas which are being pressed by the pressing means. As a result, chippings at the cut face portion formed on the brittle substrate can be prevented.

According to a brittle substrate cutting system of the present invention, the second holding controlling means controls the second holding means such that the first holding means and the second holding means move at a predetermined speed and the second holding controlling means controls the third holding means such that the third holding means and the pressing means move at the predetermined speed while the second holding means and the third holding means oppose each other with the brittle substrate therebetween.

The second holding means and the third holding means firmly hold the brittle substrate since the first holding means, the second holding means and third holding means move at the same speed.

According to a brittle substrate cutting system of the present invention, the pressing means may further include a fourth holding means and a fifth holding means for moving along the scribing line in a first direction and for holding the brittle substrate, the fourth holding means and the fifth holding means being arranged in a direction opposite to the first direction from the pressing means.

The first holding means is moved along the scribing line while the fourth holding means and the fifth holding means hold the cut portions of the area on which the scribing line is formed, thereby preventing an unnecessary force being applied to the areas which are being pressed by the pressing means. As a result, chippings at the cut face portion formed on the brittle substrate can be prevented.

According to a brittle substrate cutting system of the present invention, the scribing line forming means may include a laser beam irradiating means for irradiating a laser beam on the first surface of the brittle substrate and a cooling means for cooling the vicinity of the portions of the first surface of the brittle substrate where the laser beam is irradiated by the laser beam irradiating means.

A laser beam is irradiated on the first surface of the brittle substrate, and the vicinity of the portions where the laser beam is irradiated is cooled, so that a scribing line with a vertical crack generated therein is formed. Therefore, a stress distortion does not remain in an edge of a cut face. As a result, the cut face portion which is formed on the brittle substrate can be prevented from being chipped when the cut brittle substrate is transported to a different apparatus from the brittle substrate cutting apparatus, the different apparatus being used for a step subsequent to cutting the brittle substrate.

According to a brittle substrate cutting system of the present invention, the cooling means may be a cooling nozzle, and the cooling nozzle may cool the vicinity of the portions where the laser beam is irradiated by spraying a cooling medium on the first surface of the brittle substrate.

A predetermined area of the brittle substrate is positively cooled without contacting the brittle substrate cutting system since the cooling medium is sprayed onto the first surface of the brittle substrate by the cooling nozzle.

A brittle substrate cutting system according to the present invention may include a laser beam/cooling medium receiving section for receiving at least one of the laser beam irradiated by the laser beam irradiating means and the cooling medium sprayed by the cooling nozzle.

Since diffusion of at least one of a laser beam and cooling medium is prevented, the safety of the brittle substrate cutting apparatus is improved.

According to a brittle substrate cutting system of the present invention, the laser beam/cooling medium receiving section may be movable separately from the pressing means.

A brittle substrate on which a scribing line is formed is cut when the pressing means follows the cutter at the time the scribing line is formed. While the scribing line is formed on the first surface of the brittle substrate, a second surface of the brittle material is pressed by the pressing means. Therefore, the scribing step and the breaking step are approximately simultaneously performed. Accordingly, time for a cutting step is reduced.

According to a brittle substrate cutting system of the present invention, the cooling nozzle may be movable along the scribing line.

Since the cooling nozzle is moved along the scribing line, a scribing condition can be set according to the material of the brittle substrate.

According to a brittle substrate cutting system of the present invention, the scribing line forming means further may include a notch forming cutter mechanism for forming a notch at a starting position of forming the scribing line on the first surface of the brittle substrate.

Since a notch is formed at a starting position of forming a scribing line on the first surface of the brittle substrate, a vertical crack extending from the scribing line is positively formed.

According to a brittle substrate cutting system of the present invention, the notch forming cutter mechanism may be integrally movable with the laser beam irradiating means and the cooling means.

The notch formed at the starting position of forming a scribing line, and a laser beam irradiating area and a cooling area are co-aligned. Therefore, the scribing line is accurately formed along the line on which a scribing line is to be formed.

According to a brittle substrate cutting system of the present invention, the scribing line forming means may be a cutter.

Since a wide selection for conditions of forming a scribing line is available, a scribing line is stably formed.

According to a brittle substrate cutting system of the present invention, the cutter may be a disk-shaped cutter wheel tip, and an edge portion may be formed in an outer circumferential edge of the cutter wheel tip.

Since a scribing line is formed while the cutter wheel tip is pressed and rotated on the brittle substrate, a speed (scribing forming speed) of forming a scribing line is improved.

According to a brittle substrate cutting system of the present invention, a plurality of recessed portions may be formed in a ridge-shaped section of the edge portion with a predetermined distance.

A plurality of recessed portions is formed in ridge-shaped sections of the edge portions with a predetermined distance, so that a plurality of protrusions is formed except where the plurality of recessed portions is formed. When a scribing line is formed, the plurality of protrusions applies a pinpoint shock upon a first surface of the brittle substrate. Therefore, a vertical crack which extends up to about 90% of the thickness of the brittle substrate is formed. As a result, the brittle substrate is positively cut after the breaking step.

According to a brittle substrate cutting system of the present invention, the cutter may be movable separately from the pressing means.

A brittle substrate on which a scribing line is formed is cut when the pressing means follows the cutter at the time the scribing line is formed. While the scribing line is formed on the first surface of the brittle substrate, a second surface of the brittle material is pressed by the pressing means. Therefore, the scribing step and the breaking step are approximately simultaneously performed. Accordingly, time for a cutting step is reduced.

According to a brittle substrate cutting system of the present invention, the first pressing controlling means may control the pressing means such that the pressing means moves along the scribing line while the first holding means and the pressing means oppose each other with the brittle substrate therebetween and while the scribing line forming means forms the scribing line on the first surface of the brittle substrate.

The pressing means is moved along the scribing line formed on a first surface of the brittle substrate while the first holding means and the pressing means oppose each other with a brittle substrate therebetween and while a scribing forming means forms a scribing line on the first surface of the brittle substrate. Therefore, a scribing step and a breaking step on the brittle substrate are approximately simultaneously performed. As a result, time of cutting step for the brittle substrate can be reduced.

According to a brittle substrate cutting system of the present invention, the scribing apparatus may include a scribing line forming means for forming the scribing line on the first surface of the brittle substrate while the first surface of the brittle substrate is held, and the breaking apparatus may further include a pressing means for pressing the second surface opposing the first surface of the brittle substrate.

According to a brittle substrate cutting system of the present invention, the pressing means is moved along the scribing line formed on the first surface of the brittle substrate while the scribing line forming means holds the first surface of the brittle substrate and while the pressing means holds the second surface of the brittle substrate. Therefore, the a pressing force is applied to the second surface of the brittle substrate along the scribing line, this second surface opposing the first surface of the brittle substrate on which the scribing line is formed. As a result, a bending moment is applied to the brittle substrate such that a vertical crack extending from the scribing line positively extends in the thickness direction of the substrate to cut the brittle substrate.

Furthermore, since the scribing line is formed, while the scribing forming means holds the first surface of the brittle substrate and the pressing means presses the second surface of the brittle substrate, the scribing step and the breaking step are approximately simultaneously performed. Accordingly, time of a cutting step for the brittle substrate is reduced.

According to a brittle substrate cutting system of the present invention, the brittle substrate may be a bonded substrate obtained by bonding substrates, the scribing apparatus may include a first scribing forming means for forming a first scribing line on a first surface of the bonded substrate and a second scribing line formingmeans for forming a second scribing line on a second surface of the bonded substrate opposing the first surface of the bonded substrate, and the breaking apparatus may break the bonded substrate along the first scribing line formed on the first surface of the bonded substrate by the first scribing line forming means and break the bonded substrate along the second scribing line formed on the second surface of the bonded substrate by the second scribing line forming means, and the first pressing controlling means may move a pressing force upon the second surface of the bonded substrate opposing the first surface of the bonded substrate along the scribing line while the first surface of the bonded substrate is held.

According to a brittle substrate cutting system of the present invention, a pressing force upon a second surface of the bonded substrate is moved along the scribed line formed on a first surface of the bonded substrate while the first surface of the bonded substrate is held, this second surface of the bonded substrate opposing the first surface of the bonded substrate. In this manner, while the pressing force is moved along the scribing line formed on the first surface of the bonded substrate, the pressing force is applied to the second surface of the bonded substrate, this second surface opposing the first surface of the bonded substrate. Therefore, a bending moment is applied to the bonded substrate such that a vertical crack extending from the scribing line extends in the thickness direction of the substrate to cut the bonded substrate.

According to a brittle substrate cutting system of the present invention, the breaking apparatus may include: a first bonded substrate pressing means for pressing the first surface of the bonded substrate; a second bonded substrate pressing means for pressing the second surface of the bonded substrate; a first bonded substrate holding means for holding the first surface of the bonded substrate; a second bonded substrate holdingmeans for holding the second surface of the bonded substrate; a first controlling means for the pressing means for controlling the second bonded substrate pressing means such that the second bonded substrate pressing means moves along the first scribing line while the first bonded substrate holding means and the second bonded substrate holding means oppose each other with the bonded substrate therebetween; and a second controllingmeans for the pressing means for controlling the first bonded substrate pressing means such that the first bonded substrate pressing means moves along the second scribing line while the second bonded substrate holding means and the first bonded substrate holding means oppose each other with the bonded substrate therebetween.

According to a brittle substrate cutting system of the present invention, the pressing means is moved along the scribing line formed on the first surface of the brittle substrate while the holding means holds the first surface of the bonded substrate and while the pressing means presses the second surface of the bonded substrate. Furthermore, another pressing means is moved along the scribing line formed on the second surface of the brittle substrate while the another holding means holds the second surface of the bonded substrate and while the another pressing means presses the first surface of the bonded substrate. As a result, a bending moment is applied to the bonded substrate such that a vertical crack extending from the scribing line positively extends in the thickness direction of the substrate to cut the bonded substrate.

According to a brittle substrate cutting system of the present invention, the first controlling means for the pressing means may control the second bonded substrate pressing means such that the second bonded substrate pressing means rolls along the first scribing line, and the second controlling means for the pressing means controls the first bonded substrate pressing means such that the first bonded substrate pressing means rolls along the second scribing line.

The controlling means readily moves the pressing means along the scribing line and another controlling means readily moves another pressing means along another scribing line.

According to a brittle substrate cutting system of the present invention, the first bonded substrate pressing means and the second bonded substrate pressing means may be rollers.

Since rollers are used as the pressing means and another pressing means, the controlling means and another controlling means readily rotate the pressing means and the another pressing means along the scribing line.

According to a brittle substrate cutting system of the present invention, the pressing means may be a conveyor.

Since conveyors are used as the pressing means and another pressing means, the controlling means and another controlling means readily rotate the pressing means and the another pressing means along the scribing line.

According to a brittle substrate cutting system of the present invention, the pressing means may be a bearing.

Since bearings are used as the pressing means and another pressing means, the controlling means and another controlling means readily rotate the pressing means and the another pressing means along the scribing line.

According to a brittle substrate cutting system of the present invention, a first groove section may be formed in the second bonded substrate pressing means such that the second bonded substrate pressing means does not contact with a line on the second surface of the bonded substrate, the line opposing the first scribing line, and a second groove section may be formed in the first bonded substrate pressing means such that the first bonded substrate pressing means does not contact with a line on the first surface of the bonded substrate, the line opposing the second scribing line.

When the bonded substrate is cut along the scribing line, the pressing means holds both sides of the line on the surface of the bonded substrate so as not to contact with the line opposing the scribing line. Therefore, occurrence of chippings at the cut face portion is prevented during the cutting process.

According to a brittle substrate cutting system of the present invention, the breaking apparatus may further include a first controlling means for the holding means for controlling the first bonded substrate holding means such that the first bonded substrate holding means moves along the first scribing line while the first bonded substrate holding means and the second bonded substrate pressing means oppose each other with the bonded substrate therebetween, and a second controlling means for the holding means for controlling the second bonded substrate holding means such that the second bonded substrate holding means moves along the second scribing line while the second bonded substrate holding means and the first bonded substrate pressing means oppose each other with the bonded substrate therebetween.

The bonded substrate is cut without forming a plurality of starting points of cutting. As a result, a cut face is formed without having unevenness on the brittle substrate.

According to a brittle substrate cutting system of the present invention, the first controlling means for the holding means may control the first bonded substrate holding means such that the first bonded substrate holding means rolls along the first scribing line, and the second controlling means for the holding means may control the second bonded substrate holding means such that the second bonded substrate holding means rolls along the second scribing line.

The controllingmeans readilymoves the holdingmeans along the scribing line, and another controlling means readily moves another holding means along another scribing line.

According to a brittle substrate cutting system of the present invention, the first bonded substrate holding means and the second bonded substrate holding means may be rollers.

Since rollers are used as the holding means and another holding means, the controlling means and another controlling means readily rotate the holding means and the another holding means along the scribing line.

According to a brittle substrate cutting system of the present invention, the first bonded substrate holding means and the second bonded substrate holding means may be conveyors.

Since conveyers are used as the holding means and another holding means, the controlling means and another controlling means readily rotate the holding means and the another holding means along the scribing line.

According to a brittle substrate cutting system of the present invention, the first bonded substrate holding means and the second bonded substrate holding means may be bearings.

Since bearings are used as the holding means and another holding means, the controlling means and another controlling means readily rotate the holding means and the another holding means along the scribing line.

According to a brittle substrate cutting system of the present invention, a third groove section may be formed in the first bonded substrate holding means such that the first bonded substrate holding means does not contact with the first scribing line, and a fourth groove section may be formed in the second bonded substrate holding means such that the second bonded substrate holding means does not contact with the second scribing line.

When the bonded substrate is cut along the scribing line, the pressing means holds both sides of the scribing line so as not to contact with the scribing line. Therefore, occurrence of chippings at the cut face portion is prevented during the cutting process.

According to a brittle substrate cutting system of the present invention, the width of the third groove section formed in the first bonded substrate holding means may be larger than that of the second bonded substrate pressing means, and the width of the fourth groove section formed in the second bonded substrate holding means may be larger than that of the first bonded substrate pressing means.

The bonded substrate is positively cut since a portion of the pressing means goes under the holding means, so that the bonded substrate is likely to bend.

According to a brittle substrate cutting system of the present invention, the first bonded substrate pressing means and the second substrate pressing means respectively may move in a first direction along the first scribing line and the second scribing line, and the brittle substrate cutting system may further include a third bonded substrate holding means and a fourth bonded substrate holding means respectively for holding the brittle substrate in the first direction from the first bonded substrate pressing means and the second bonded substrate pressing means, and the breaking apparatus may further include a third controlling means for the holding means for controlling the third bonded substrate holding means such that the third bonded substrate holding means moves on the first surface along the first scribing line while the third bonded substrate holding means holds the bonded substrate, and controlling the fourth bonded substrate holding means such that the fourth bonded substrate holding means moves on the second surface along the second scribing line while the fourth bonded substrate holding means holds the bonded substrate.

The holding means is moved along the scribing line while holding the uncut portions of the area on which the scribing line is formed, thereby preventing an unnecessary force being applied to the areas which are being pressed by the pressing means. As a result, chippings at the cut face portion formed on the bonded substrate can be prevented.

According to a brittle substrate cutting system of the present invention, the third controlling means for the holding means may control the third bonded substrate holding means such that the third bonded substrate holding means, the first bonded substrate holding means and the first bonded substrate pressing means move at a predetermined speed and the third controlling means for the holding means may control the fourthbonded substrate holdingmeans such that the fourth bonded substrate holding means, the second bonded substrate holding means and the second bonded substrate pressing means move at the predetermined speed while the third bonded substrate holding means and the fourth bonded substrate holding means oppose each other with the bonded substrate therebetween.

Since the holding means and the pressing means are moved at the same speed, the bonded substrate is firmed held by the pressing means.

According to a brittle substrate cutting system of the present invention, the first bonded substrate pressing means may move in the first direction along the second scribing line, the second bonded substrate pressing means may move in the first direction along the first scribing line, and the brittle substrate cutting system may further include a fifth bonded substrate holding means and a sixth bonded substrate holding means respectively for holding the brittle substrate in a direction opposite to the first direction from the first bonded substrate pressing means and the second bonded substrate pressing means.

The holding means holds the cut portions of the area on which the scribing line is formed, thereby preventing an unnecessary force being applied to the areas which are being pressed by the pressing means. As a result, chippings at the cut face portion formed on the glass substrate can be prevented.

According to a brittle substrate cutting system of the present invention, the first controlling means for the pressing means may control the second bonded substrate pressing means such that the second bonded substrate pressing means moves along the first scribing line and the second controlling means for the pressing means may control the first bonded substrate pressing means such that the first bonded substrate pressing means may move along the second scribing line while the first bonded substrate holding means and the second bonded substrate pressing means oppose each other with the bonded substrate therebetween, the first scribing line forming means forms the first scribing line on the first surface of the bonded substrate, the second bonded substrate holding means and the first bonded substrate pressing means oppose each other with the bonded substrate therebetween and the second scribing line forming means forms the second scribing line on the second surface of the bonded substrate.

The scribing step and the breaking step are approximately simultaneously performed. Accordingly, time of a cutting step for the bonded substrate is reduced.

A brittle substrate cutting method of the present invention includes the steps of (a) forming a scribing line on a first surface of a brittle substrate; and (b) breaking the brittle substrate along the scribing line, and the step (b) includes (b-1) the step: of moving a pressing force upon a second surface of the brittle substrate opposing the first surface of the brittle substrate along the scribing line while the first surface of the brittle substrate is held, thereby the above-described objective of the present invention being achieved.

According to a brittle substrate cutting method of the present invention, the step (b) may be performed by a breaking apparatus for breaking the brittle substrate along the scribing line, the breaking apparatus may include: a pressing means for pressing the second surface of the brittle substrate; and a first holding means for holding the first surface of the brittle substrate, and the step (b-1) may include the step of moving the pressing means along the scribing line while the first holding means and the pressing means oppose each other with the brittle substrate therebetween.

According to a brittle substrate cutting method of the present invention, the step (b-1) may include the step of controlling the pressing means such that the pressing means rolls along the scribing line.

According to a brittle substrate cutting method of the present invention, the pressing means may be a roller.

According to a brittle substrate cutting method of the present invention, the pressing means may be a conveyor.

According to a brittle substrate cutting method of the present invention, the pressing means may be a bearing.

According to a brittle substrate cutting method of the present invention, a groove section may be formed in the pressing means such that the pressing means does not contact with a line on the second surface of the brittle substrate, the line opposing the scribing line.

According to a brittle substrate cutting method of the present invention, the step (b) may further include the step of: (b-2) controlling the first holding means such that the first holding means moves along the scribing line while the first holding means and the pressing means oppose each other with the brittle substrate therebetween.

According to a brittle substrate cutting method of the present invention, the step (b-2) may include the step of controlling the first holding means such that the first holding means rolls along the scribing line.

According to a brittle substrate cutting method of the present invention, the holding means may be a roller.

According to a brittle substrate cutting method of the present invention, the holding means may be a conveyor.

According to a brittle substrate cutting method of the present invention, the holding means may be a bearing.

According to a brittle substrate cutting method of the present invention, a groove section may be formed in the first holding means such that the first holding means does not contact with the scribing line.

According to a brittle substrate cutting method of the present invention, the width of the groove section formed on the first holding means may be larger than that of the pressing means.

According to a brittle substrate cutting method of the present invention, the pressing means may move along the scribing line in a first direction and may further include a second holding means and a third holding means for holding the brittle substrate in the first direction from the pressing means, and the step (b) may further include the step of: (b-3) controlling the second holding means such that the second holding means moves on the first surface along the scribing line while the second holding means holds the brittle substrate, and controlling the third holding means such that the third holding means moves on the second surface along the scribing line while the third holding means holds the brittle substrate.

According to a brittle substrate cutting method of the present invention, the step (b-3) may include the step of controlling the second holding means such that the first holding means and the second holding means move at a predetermined speed, and controlling the third holding means such that the third holding means and the pressing means move at the predetermined speed while the second holding means and the third holding means oppose each other with the brittle substrate therebetween.

According to a brittle substrate cutting method of the present invention, the pressing means may move in a first direction along the scribing line and may further include a fourth holding means and a fifth holding means for holding the brittle substrate in a direction opposite to the first direction from the pressing means.

According to a brittle substrate cutting method of the present invention, the step (a) may include steps of: (a-1) irradiating a laser beam on the first surface of the brittle substrate; and (a-2) cooling the vicinity of the portions of the first surface of the brittle substrate where the laser beam is irradiated by the laser beam irradiating means.

According to a brittle substrate cutting method of the present invention, the step (a-2) may be performed by a cooling medium, and the cooling means is a cooling nozzle, and the cooling nozzle cools the vicinity of the portions where the laser beam is irradiated, by spraying a cooling medium on the first surface of the brittle substrate.

According to a brittle substrate cutting method of the present invention, wherein the step (a-1) may be performed by a laser beam irradiating means and may include the step of receiving at least one of the laser beam irradiated by the laser beam irradiating means and the medium sprayed by the cooling nozzle.

According to a brittle substrate cutting method of the present invention, the step of receiving at least one of the laser beam irradiated by the laser beam irradiating means and the medium sprayed by the cooling nozzle may be performed by a laser beam/cooling medium receiving section, and the laser beam/cooling medium receiving section may be movable separately from the pressing means.

According to a brittle substrate cutting method of the present invention, the cooling nozzle may be movable along the scribing line.

According to a brittle substrate cutting method of the present invention, the step (a) may further include the step of forming a notch at a starting position of forming the scribing line on the first surface of the brittle substrate.

According to a brittle substrate cutting method of the present invention, the step of forming a notch may be performed by a notch forming cutter mechanism, and the notch forming cutter mechanism may be integrally movable with the laser beam irradiating means and the cooling means.

According to a brittle substrate cutting method of the present invention, the step (a) may be performed by a scribing line forming means, and the scribing line forming means is a cutter.

According to a brittle substrate cutting method of the present invention, the cutter may be a disk-shaped cutter wheel tip, and an edge portion is formed in an outer circumferential edge of the cutter wheel tip.

According to a brittle substrate cutting method of the present invention, a plurality of recessed portions may be formed in a ridge-shaped section of the edge portion with a predetermined distance.

According to a brittle substrate cutting method of the present invention, the cutter may be movable separately from the pressing means.

According to a brittle substrate cutting method of the present invention, the step (b-1) may control the pressing means such that the pressing means moves along the scribing line while the first holding means and the pressing means oppose each other with the brittle substrate therebetween and while the scribing line forming means forms the scribing line on the first surface of the brittle substrate.

According to a brittle substrate cutting method of the present invention, the step (a) may further include the step of forming the scribing line on the first surface of the brittle substrate while the first surface of the brittle substrate is held, and the step (b) further may include the step of pressing a second surface opposing the first surface of the brittle substrate.

According to a brittle substrate cutting method of the present invention, the brittle substrate may be a bonded substrate obtained by bonding substrates, the scribing apparatus includes a first scribing forming means for forming a first scribing line on a first surface of the bonded substrate and a second scribing line forming means for forming a second scribing line on a second surface of the bonded substrate opposing the first surface of the bonded substrate, and the step (b-1) may include the steps of: breaking the bonded substrate along the first scribing line formed on the first surface of the bonded substrate by the first scribing line forming means and breaking the bonded substrate along the second scribing line formed on the second surface of the bonded substrate by the second scribing line forming means, and moving a pressing force upon the second surface of the bonded substrate opposing the first surface of the bonded substrate along the scribing line while the first surface of the bonded substrate is held.

According to a brittle substrate cutting method of the present invention, the step (b) may be performed by a breaking apparatus for breaking the brittle substrate along the scribing line, the breaking apparatus may include: a first bonded substrate pressing means for pressing the first surface of the bonded substrate; a second bonded substrate pressing means for pressing the second surface of the bonded substrate; a first bonded substrate holding means for holding the first surface of the bonded substrate; and a second bonded substrate holding means for holding the second surface of the bonded substrate; and the step (b-1) may include the steps of: controlling the second bonded substrate pressing means such that the second bonded substrate pressing means moves along the first scribing line while the first bonded substrate holding means and the second bonded substrate holding means oppose each other with the bonded substrate therebetween; and controlling the first bonded substrate pressing means such that the first bonded substrate pressing means moves along the second scribing line while the second bonded substrate holding means and the first bonded substrate holding means oppose each other with the bonded substrate therebetween.

According to a brittle substrate cutting method of the present invention, the step (b-1) may include the steps of: controlling the second bonded substrate pressing means such that the second bonded substrate pressing means rolls along the first scribing line; and controlling the first bonded substrate pressing means such that the first bonded substrate pressing means rolls along the second scribing line.

According to a brittle substrate cutting method of the present invention, the first bonded substrate pressing means and the second bonded substrate pressing means may be rollers.

According to a brittle substrate cutting method of the present invention, the pressing means may be a conveyor.

According to a brittle substrate cutting method of the present invention, the pressing means may be a bearing.

According to a brittle substrate cutting method of the present invention, a first groove section may be formed in the second bonded substrate pressing means such that the second bonded substrate pressing means does not contact with a line on the second surface of the bonded substrate, the line opposing the first scribing line, and a second groove section is formed in the first bonded substrate pressing means such that the first bonded substrate pressing means does not contact with a line on the first surface of the bonded substrate, the line opposing the second scribing line.

According to a brittle substrate cutting method of the present invention, the step (b) may further include the steps of: (b-2) controlling the first bonded substrate holding means while the first bonded substrate holding means and the second bonded substrate pressing means oppose each other with the bonded substrate therebetween such that the first bonded substrate holding means moves along the first scribing line, and controlling the second bonded substrate holdingmeans while the second bonded substrate holding means and the first bonded substrate pressing means oppose each other with the bonded substrate therebetween such that the second bonded substrate holding means moves along the second scribing line.

According to a brittle substrate cutting method of the present invention, the step (b-2) may include the step of controlling the first bonded substrate holding means such that the first bonded substrate holding means rolls along the first scribing line, and controlling the second bonded substrate holding means such that the second bonded substrate holding means rolls along the second scribing line.

According to a brittle substrate cutting method of the present invention, the first bonded substrate holding means and the second bonded substrate holding means may be rollers.

According to a brittle substrate cutting method of the present invention, the first bonded substrate holding means and the second bonded substrate holding means may be conveyors.

According to a brittle substrate cutting method of the present invention, the first bonded substrate holding means and the second bonded substrate holding means may be bearings.

According to a brittle substrate cutting method of the present invention, a third groove section may be formed in the first bonded substrate holding means such that the first bonded substrate holding means does not contact with the first scribing line, and a fourth groove section may be formed in the second bonded substrate holding means such that the second bonded substrate holding means does not contact with the second scribing line.

According to a brittle substrate cutting method of the present invention, the width of the third groove section formed in the first bonded substrate holding means may be larger than that of the second bonded substrate pressing means, and the width of the fourth groove section formed in the second bonded substrate holding means may be larger than that of the first bonded substrate pressing means.

According to a brittle substrate cutting method of the present invention, the first bonded substrate pressing means and the second substrate pressing means respectively may move in a first direction along the first scribing line and the second scribing line, and the brittle substrate cutting method may further include the use of a third bonded substrate holding means and a fourth bonded substrate holding means respectively for holding the brittle substrate in the first direction from the first bonded substrate pressing means and the second bonded substrate pressing means, and the step (b) may further include the step of: (b-3) controlling the third bonded substrate holding means such that the third bonded substrate holding means moves on the first surface along the first scribing line while the third bonded substrate holding means holds the bonded substrate and for controlling the fourth bonded substrate holding means such that the fourth bonded substrate holding means moves on the second surface along the second scribing line while the fourth bonded substrate holding means holds the bonded substrate.

According to a brittle substrate cutting method of the present invention, the step (b-3) may include the step of: controlling the third bonded substrate holding means such that the third bonded substrate holding means, the first bonded substrate holdingmeans and the first bonded substrate pressing means move at a predetermined speed and the third controlling means for the holding means controls the fourth bonded substrate holding means such that the fourth bonded substrate holding means, the second bonded substrate holding means and the second bonded substrate pressing means move at the predetermined speed while the third bonded substrate holding means and the fourth bonded substrate holding means oppose each other with the bonded substrate therebetween.

According to a brittle substrate cutting method of the present invention, the first bonded substrate pressing means maymove in the first direction along the second scribing line, the second bonded substrate pressing means moves in the first direction along the first scribing line, and the brittle substrate cutting method may further include the use of a fifth bonded substrate holding means and a sixth bonded substrate holding means respectively for holding the brittle substrate in a direction opposite to the first direction from the first bonded substrate pressing means and the second bonded substrate pressing means.

A brittle substrate cutting method according to the present invention may include the step of controlling the second bonded substrate pressing means such that the second bonded substrate pressing means moves along the first scribing line and controlling the first bonded substrate pressing means such that the first bonded substrate pressing means moves along the scribing line while the first bonded substrate holding means and the second bonded substrate pressing means oppose each other with the bonded substrate therebetween, the first scribing line forming means forms the first scribing line on the first surface of the bonded substrate, the second bonded substrate holding means and the first bonded substrate pressing means oppose each other with the bonded substrate therebetween and the second scribing line forming means forms the second scribing line on the second surface of the bonded substrate.

### BRIEF DESCRIPTION OF THE DRAWINGS

Figure **1** is a perspective view schematically showing a structure of a cutting apparatus **100** according to Embodiment 1 of the present invention.
Figure **2** is a front view showing a structure of a scribing unit **40** and a breaking unit **30.**
Figure **3** is a front view showing a structure of a pressing mechanism.
Figure **4** is a cross-section view showing a substrate holding roller.
Figure **5** is a cross-section view showing a pressing mechanism.
Figure **5A** is a perspective view showing a pressing conveyor mechanism **32a',** which is another example for a pressing roller mechanism **32.**
Figure **6** is a view showing a state in which the center portion of a laser beam/cooling water receiving section **35** matches an optical axis of a laser beam irradiating optical system **43** and a nozzle section **42a** of a cooling mechanism **42** is moved to a cooling water spraying position located above by an air cylinder **42b** for moving upward/downward.
Figure **7** is a view showing a state in which a breaking unit **30** and a scribing unit **40** oppose each other.
Figure **8** is a view showing a state in which flat side edge portions in the width direction on both sides of the substrate holding roller **45a** with an outer circumferential surface thereof recessed in a V-shape are pressed upon both sides of the scribing line formed on the glass substrate **90.**
Figure **9** is a view showing another example for the cutting apparatus **100.**
Figure **10** is a view schematically showing a breaking unit **30** and a scribing unit **40** according to Embodiment 2 of the present invention.
Figure **11** is a view showing that a glass substrate **90** is cut along a scribing line when a pressing roller **32a** is sequentially pressed upon both side portions of the scribing line of the glass substrate **90** which is held by a substrate holding roller **45a.**
Figure **12** is a perspective view showing a cutting apparatus according to Embodiment 3 of the present invention.
Figure **13** is a front view showing a breaking unit **30** and a scribing unit **40** included in the cutting apparatus according to Embodiment 3 of the present invention.
Figure **14** is a view showing a state in which an optical axis of a laser beam irradiating optical system **43** matches a notch and the center portion of a laser beam/cooling water receiving section **35** matches the optical axis of the laser beam irradiating optical system **43.**
Figure **15** is a front view showing a breaking unit **30** and a scribing unit **40** provided in the cutting apparatus according to Embodiment 4 of the present invention.
Figure **16** is a view showing a state in which a pressing roller **32a** and a substrate holding roller **45a** oppose each other with a glass substrate **90** therebetween.
Figure **17** is a front view showing a structure of a breaking unit **30** and a scribing unit **40** provided in a cutting apparatus according to Embodiment 5 of the present invention.
Figure **18** is a view schematically showing a structure of a cutting apparatus according to Embodiment 7.
Figure **19** is a view for illustrating an operation of the cutting apparatus according to Embodiment 7.
Figure **20** is a flow chart showing a procedure for cutting a substrate according to a number of embodiments of the present invention.
Figure **21** is a front view showing a structure of breaking units **30** and a scribing unit **40** provided in a cutting apparatus according to Embodiment 8 of the present invention.

### BEST MODE FOR CARRYING OUT THE INVENTION

Hereinafter, embodiments of the present invention will be described in detail with reference to the drawings.

### <Embodiment 1>

### 1. Cutting apparatus

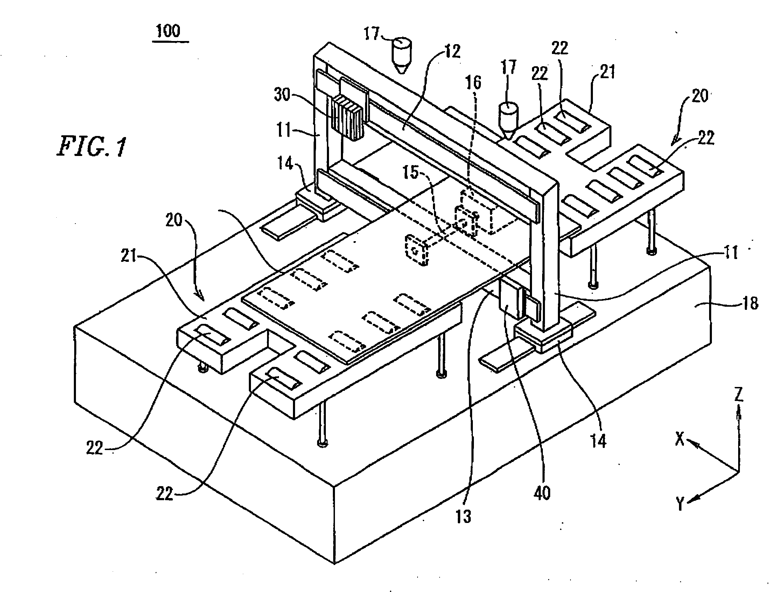

Figure **1** is a perspective view schematically showing a structure of a cutting apparatus **100** according to Embodiment 1 of the present invention.

The cutting apparatus **100** is, for example, used in order to cut a glass substrate **90** into a predetermined size. The glass substrate **90** is a brittle substructure which is used for a liquid crystal display panel. The cutting apparatus **100** includes a base **18** and a pair of base supporting mechanisms **20** provided on the base **18**. The glass substrate **90** to be cut is mounted on the pair of the base supporting mechanisms **20** in a horizontal state. The glass substrate **90** is supported between the pair of the substrate supporting mechanisms **20** in a bridged state.

The cutting apparatus **100** further includes a supporting table **21** and a plurality of transporting rollers **22.** The pair of substrate supporting mechanisms **20** includes the supporting table **21** arranged on the base **18** in a horizontal state and the plurality of transporting rollers **22** rotatably arranged at the upper portion of the supporting table **21.**

For example, a plurality of adsorbing holes (not shown) is formed in at least one of the pair of the supporting tables **21.** An adsorbing means (e.g., a vacuum pump or adsorbing motor which is not shown) adsorbs the glass substrate **90** through the plurality of adsorbing holes. The glass substrate **90** is adsorbed onto the supporting table **21** in this manner. Therefore, the glass substrate **90** is fixed on at least one of the pair of supporting tables **21.**

The plurality of transporting rollers **22** is arranged so as to be in plurality of columns (two columns in Figure **1**). The plurality of columns is parallel to each other. Each of the plurality of transporting rollers in each column is arranged with a predetermined distance therebetween. The plurality of transporting rollers **22** are moved upward and downward by an upward/downward means (not shown). The plurality of transporting rollers **22** are moved upward, so that upper portions of the plurality of transporting rollers are projected above an upper surface of the supporting table **21,** When the upper portions of the plurality of transporting rollers **22** are projected above the upper surface of the supporting table **21,** the plurality of transporting rollers **22** are rotated, so that the glass substrate **90** is horizontally transported from the supporting table **21** of one of the pair of the substrate supporting mechanisms **20** to the supporting table **21** of the other of the pair of the substrate supporting mechanisms **20.** The'plurality of transporting rollers **22** are moved downward, so that the upper portions of the plurality of transporting rollers **22** are lowered below the upper surface of the supporting table **21.**

The cutting apparatus **100** further includes a breaking unit **30,** a scribing unit **40,** an upper guide rail **12,** a lower guide rail **13,** a pair of supporting posts **11** and a pair of sliders. The breaking unit **30** and the scribing unit **40** are provided between the pair of substrate supporting mechanisms **20** to be used for cutting the glass substrate **90.** The breaking unit **30** and the scribing unit **40** are respectively slidably attached to the upper guide rail **12** and the lower guide rail **13.** The structures of the breaking unit **30** and the scribing unit **40** will be described later in detail with reference to the accompanying drawings.

The upper guide rail **12** and the lower guide rail **13** are arranged along an X direction orthogonal to a transporting direction of the glass substrate which is transported by the pair of substrate supporting mechanisms **20.** Each end portion of the upper guide rail **12** is bridged in a horizontal state between upper portions of the pair of supporting posts **11** which are provided on the base **18** in a vertical state. Each end portion of the lower guide rail **13** is bridged in a horizontal state between lower portions of the pair of the supporting posts **11.** The breaking unit **30** and the scribing unit **40** respectively slide along the upper guide rail **12** and the lower guide rail **13** powered by a linear motor mechanism, for example.

Each of the pair of the supporting posts **11** is provided on an upper surface of the base **18.** Each of the pair of the supporting posts **11** is slidable along sliders **14** in a direction orthogonal to a longitudinal direction of the upper guide rail **12** and the lower guide rail **13.** Each of the pair of the supporting posts **11** is integrated with the upper guide rail **12** and the lower guide rail **13.** When each of the pair of supporting posts **11** supported by the sliders **14** slides, the upper guide rail **12** and the lower guide rail **11** integrally slide.

The cutting apparatus **100** further includes a driving section for linear interpolation. The driving section for linear interpolation is provided in a longitudinal direction below a center portion of the lower guide rail **13** arranged between lower portions of each of the pair of the supporting posts **11.** The driving section for linear interpolation includes a ball screw **15** along a Y direction which is orthogonal to the longitudinal direction of the lower guide rail **13.** The ball screw **15** rotates in forward and backward directions by a motor **16.** In the ball screw **15,** a ball nut (not shown) is attached to the center portion of the lower guide rail **13** in the longitudinal direction. The ball nut engages with the ball screw **15.** When the ball screw **15** is rotated by the motor **16,** a force along the transporting direction of the glass substrate **90** is applied to the lower guide rail **13.** As a result, the pair of the supporting posts **11** supported to be slidably by the sliders **14** slides in the Y direction which is orthogonal to the longitudinal directions of the upper guide rail **12** and the lower guide rail **13.**

The cutting apparatus **100** further includes a pair of positioning cameras **17.** The pair of positioning cameras **17** is provided in the vicinity of the upper guide rail **12** with an appropriate distance there between in the longitudinal direction of the upper guide rail **12.** The pair of positioning cameras **17** captures an alignment mark provided on the glass substrate **90** when the glass substrate **90** is positioned.

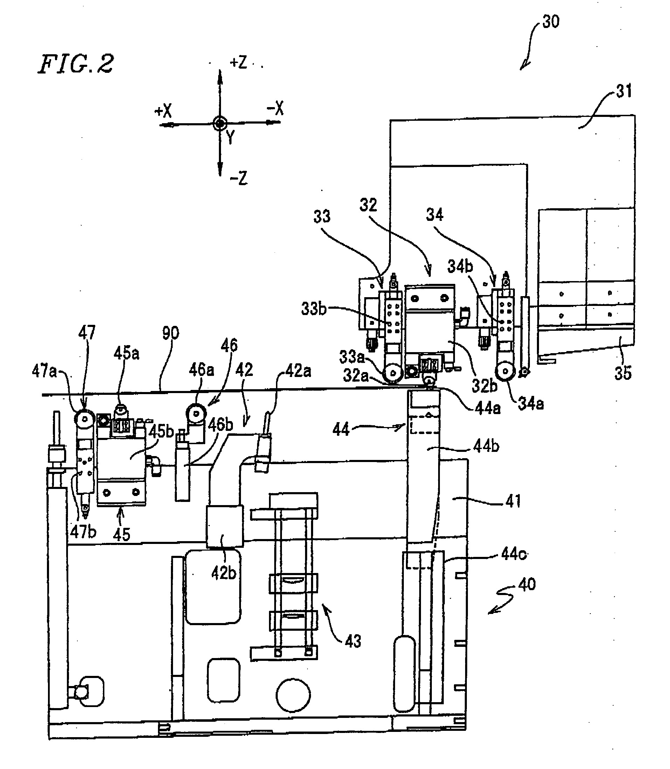

Figure **2** is a front view showing a structure of the scribing unit **40** and the breaking unit **30.**

Hereafter, the structure of the scribing unit **40** will be described in detail in reference to Figure **2.**

The scribing unit **40** includes a unit body **41,** a cooling mechanism **42** for spraying a cooling medium upward and a laser beam irradiating optical system **43** irradiating a laser beam upward.

The unit body **41** is attached to the lower guide rail **13** so as to be slidable. The cooling mechanism **42** is provided approximately at a center portion of the unit body **41.** The laser beam irradiating optical system **43** is provided at one side of the cooling mechanism **42.**

The laser beam irradiating optical system **43** irradiates a laser beam onto the glass substrate **90** supported by the pair of the substrate supporting mechanisms **20** in a bridged state. A notch forming cutter mechanism **44** is provided on the opposite aide of the cooling mechanism **42** with respect to the laser beam irradiating optical system **43.**

The cooling mechanism **42** sprays the cooling medium (e.g., a cooling liquid) in the vicinity of the portions where the laser beam is irradiated such that the portions irradiated by the laser beam are cooled. The cooling mechanism **42** includes a nozzle section **42a** for spraying the cooling medium upward and an air cylinder **42b.** The air cylinder **42b** moves the nozzle section **42a** between a spraying position and a waiting position. The spraying position is a position adjacent to the glass substrates **90** where the nozzle section **42a** sprays the cooling medium. The waiting position is a position located at a distance below the glass substrate **90.**

A cooling medium is not limited to a cooling liquid as long as the cooling medium cools portions irradiated by the laser beam. The cooling medium includes, for example, at least one of vapor and liquid. The vapor includes, for example, compressed air, helium and argon. The liquid includes, for example, water and liquefied helium. The cooling medium is, for example, a combination of these vapors and liquids.

A laser beam is irradiated on the glass substrate **90,** and the vicinity of the portions where the laser beam is irradiated is cooled such that a scribing line with a vertical crack generated therein is formed. Therefore, a stress distortion does not remain in an edge of a cut face. As a result, the cut face portion which is formed on the glass substrate **90** can be prevented from being chipped when the cut brittle substrate is transported to a different apparatus from the cutting apparatus **100,** the different apparatus being used for a step subsequent to cutting the glass substrate **90.**

When the cooling medium is sprayed onto the glass substrate **90** by the cooling nozzle, a predetermined area of the glass substrate **90** is thoroughly cooled.

The notch forming cutter mechanism **44** forms a notch as a trigger for forming a vertical crack along a line to be scribed of the glass substrate **90,** this notch being formed at a starting position of scribing for the glass substrate **90.** The notch forming cutter mechanism **44** includes an edge portion **44a,** a bracket **44b** and an air cylinder **44c** for moving the edge portion **44a** upward/downward. The edge portion **44a** is arranged along a sliding direction of the scribing unit **40.** The edge portion **44a** is attached to an upper edge portion of the bracket **44b** with a ridge facing upward. The edge portion **44a** is moved upward/downward by the air cylinder **44c** for moving upward/downward provided in the unit body **41.**

In scribing unit **40,** a substrate holding roller mechanism **45,** a first auxiliary roller mechanism **46** and a second auxiliary roller mechanism **47** are provided on the opposite side of the laser beam irradiating optical system **43** with respect to the cooling mechanism **42.** The first auxiliary roller mechanism **46** is provided between the substrate holding roller mechanism **45** and the cooling mechanism **42.** The second auxiliary roller mechanism **47** is provided on the opposite side of the first auxiliary roller mechanism **46** with respect to the substrate holding roller mechanism **45.** The substrate holding roller mechanism **45** and the second auxiliary roller mechanism **47** are attached to the unit body **41.**

The substrate holding roller mechanism **45** includes a roller holder, a substrate holding roller **45a** and a head section **45b.** The substrate holding roller mechanism **45,** for example, has a similar structure to that of a pressing roller mechanism **32** which will be described later.

The substrate holding roller **45a** is attached to the roller holder as to be rotatable. An axis direction of the substrate holding roller **45a** is a Y direction which is orthogonal to a sliding direction (X direction) of the scribing unit **40.** The structure of the substrate holding roller **45a** will be described in detail later with reference to the accompanying drawings, The head section **45b** is driven so as to move upward/downward by a motor (not shown).

The first auxiliary roller mechanism **46** includes a first auxiliary roller **46a** and an air cylinder **46b** for moving upward/downward. The first auxiliary roller **46a** is rotatably attached to an upper end portion of the air cylinder **46b** for moving upward/downward attached to the unit body **41.** An axis direction of the first auxiliary roller **46a** is a Y direction which is orthogonal to a sliding direction (X direction) of the scribing unit **40.**

The second auxiliary roller mechanism **47** includes a second auxiliary roller **47a** and an air cylinder **47b** for moving upward/downward. The second auxiliary roller **47a** is rotatably attached to an upper edge portion of the air cylinder **47b** for moving upward/downward. An axis direction of the second auxiliary roller **47a** is a Y direction which is orthogonal to a sliding direction (X direction) of the scribing unit **40.** The second auxiliary roller **47a** is arranged adjacent to the substrate holding roller **45a.** The first auxiliary roller **46a** is arranged at a distance form the substrate holding roller **45a** which is further than the distance between the substrate holding roller **45a** and the second auxiliary roller **47a.**

Hereafter, the structure of the breaking unit **30** will be described in detail with reference to Figure **2.**

The breaking unit **30** is provided on the upper guide rail **12.** The breaking unit **30** includes a breaking unit body **31,** a pressing roller mechanism **32,** a first auxiliary roller mechanism **33** on the pressing side and a second auxiliary roller mechanism **34** on the pressing side.

The breaking unit body **31** is slidable with respect to the upper guide rail **12.** The pressing roller mechanism **32,** the first auxiliary roller mechanism **33** on the pressing side and the second auxiliary roller mechanism **34** on the pressing side are attached to the breaking unit body **31.** The first auxiliary roller mechanism **33** on the pressing side is provided on a side of the pressing roller mechanism **32.** The second auxiliary roller mechanism **34** on the pressing side is provided on an opposite side of the first auxiliary roller mechanism **33** on the pressing side with respect to the pressing roller mechanism **32.**

When the pressing roller mechanism **32** moves to a position which opposes the substrate holding roller mechanism **45,** the first auxiliary roller mechanism **33** on the pressing side is arranged at a position which opposes the second auxiliary roller mechanism **47** and the second auxiliary roller mechanism **34** on the pressing side is arranged at a position which opposes the first auxiliary roller mechanism **46.** The structure of the pressing roller mechanism **32** will be described later in detail with reference to the accompanying drawings.

The first auxiliary roller mechanism **33** on the pressing side includes a first auxiliary roller **33a** on the pressing side and an air cylinder **33b.** The first auxiliary roller **33a** on the pressing side is rotatably attached to a lower edge portion of the air cylinder **33b.** The first auxiliary roller **33a** on the pressing side opposes the second auxiliary roller **47a** when the glass substrate **90** is broken.

The second auxiliary roller mechanism **34** on the pressing side includes a second auxiliary roller **34a** on the pressing side and an air cylinder **34b.** The second auxiliary roller **34a** on the pressing side is rotatably attached to a lower edge portion of the air cylinder **34b.** The second auxiliary roller **34a** on the pressing side opposes the first auxiliary roller **46a** when the glass substrate **90** is broken.

The breaking unit **30** further includes a laser beam/cooling water receiving section **35.** The laser beam/cooling water receiving section **35** receives a laser beam irradiated from a laser beam irradiating optical system **43** and cooling water sprayed from the cooling mechanism **42** on the opposite side of the first auxiliary roller mechanism **33** with respect to the pressing roller mechanism **32.**

In Embodiment 1 of present invention, the breaking unit **30** is attached to the upper guide rail **12** so as to be slidable and the scribing unit **40** is attached to the lower guide rail **13** so as to be slidable. However, the structure of the cutting apparatus **100** is not limited to this. The breaking unit **30** may be attached to the lower guide rail 13 and the scribing unit **40** may be attached to the upper guide rail **12.**

According to the brittle substrate cutting system (cutting apparatus **100)** of the present invention, a pressing means (pressing mechanism) moves along the scribing line formed on the first surface of the brittle substrate while a first holding means (holding mechanism) holds a first surface of the brittle substrate (glass substrate **90)** and the pressing means presses a second surface of the brittle substrate. Therefore, a pressing force is applied along the scribing line of the second surface of the brittle substrate, this second surface opposing the first surface of the brittle substrate on which the scribing line is formed. As a result, a bending moment is applied to the brittle substrate such that a vertical crack extending from the scribing line positively extends in the thickness direction of the substrate to cut the brittle substrate.

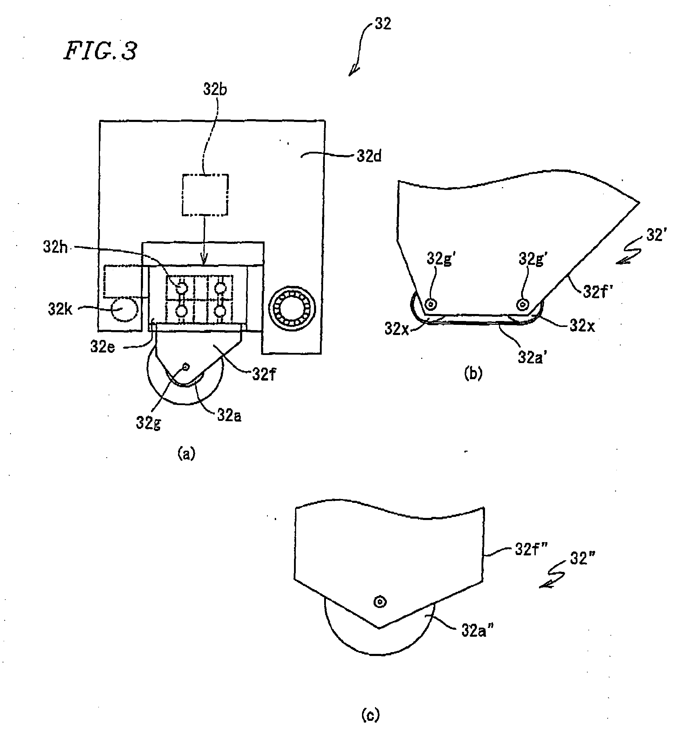

Figure **3** is a front view showing a structure of the pressing mechanism.

Figure **3(a)** is a front view showing the pressing roller mechanism **32.**

The pressing roller mechanism **32** includes a pressing roller **32a,** an air cylinder **32b,** a head section **32d,** a sliding block **32e,** a roller holder **32f,** a supporting axis **32g,** a bearing **32h** and a stopper **32k.**

The sliding block **32e** is rotatably attached to the head section **32d.** An energizing force is applied to the sliding block **32e** by the air cylinder **32b** which is provided in the head section **32d.** The roller holder **32f** is attached to the sliding block **32e** so as to be rotatable around the vertical axis by the bearing **32h.**

The roller holder **32f** is projected below the sliding block **32e.** The supporting axis **32g** is provided on a lower edge portion of the roller holder **32f** in a horizontal state.

The pressing roller **32a** is provided on the supporting axis **32g** so as to be rotatable. The pressing roller **32a** opposes the substrate holding roller **45a** when the glass substrate **90** is broken.

The stopper **32k** is provided in the head section **32d.** The stopper **32k** detects a height of the head section **32d** when the pressing roller contacts the glass substrate **90,** The head section **32d** is moved downward by a motor (not shown) of the pressing roller mechanism. When the pressing roller **32a** contacts an upper surface of the glass substrate **90** with a predetermined force, micro current is flowed between the stopper **32k** and the sliding block. The stopper **32k** detects a change from a state in which the sliding block **32e** and the stopper **32k** are in contact to a state in which the sliding block **32e** and the stopper **32k** are separated. The stopper **32k** also functions as a stopper for a rotating operation of the sliding block **32e.**

When the change in state is detected, the state in which the sliding block **32e** and the stopper **32k** are in contact to the state in which the sliding block **32e** and the stopper **32k** are separated, a position of the head section **32d** in a Z direction is calculated by a controller. The controller drives a motor such that the motor moves the head section **32d** upward/downward. For example, a position (zero point position) in a vertical direction (Z direction) of the head section **32d** with respect to a surface of the glass substrate **90** is calculated when the pressing roller **32a** contacts the glass substrate **90.** An amount (distance) which the pressing roller **32a** is pressed into the glass substrate is set based on the zero point position.

The structure of the substrate holding roller mechanism **45** is similar to that of the pressing roller mechanism **32** except that the substrate holding roller mechanism **45** is inverted in a vertical direction.

When a pressing means (e.g., pressing roller mechanism **32)** rolls along the scribing line, the pressing means is readily moved along the scribing line.

When a pressing means is a roller, the pressing means is readily moved along the scribing line.

Figure **3(b)** shows a pressing conveyor mechanism **32',** which is another example for the pressing mechanism **32.**

The pressing conveyor mechanism **32'** includes a pressing conveyor **32a',** an air cylinder **32b,** a head section **32d,** sliding block **32e,** a conveyor holder **32f',** two supporting axes **32g'** a bearing **32h** and a stopper **32k.** The structure of the pressing conveyor mechanism **32'** is the same as that of the pressing roller mechanism **32** except that the pressing conveyor **32'** and the conveyor holder **32f'** are included in the pressing conveyor mechanism **32'** instead of the pressing roller **32a** instead of the roller holder **32f.**

In Figure **3(b),** the same components as those in Figures **3(a)** are denoted by the same reference numerals, and the description thereof will be omitted.

The pressing means readily rolls along the scribing line since a conveyor is used as a pressing means.

Figure **3(c)** shows a pressing bearing mechanism **32'',** which is another example for the pressing roller mechanism **32.**

The pressing bearing mechanism **32''** includes a pair of pressing bearings **32x,** an air cylinder 32b, a head section **32d,** a sliding block **32e,** a holder **32f'',** a supporting axis **32g''** a bearing **32h** and a stopper **32k.** The structure of the pressing bearing mechanism **32''** is the same as that of the pressing roller mechanism **32** except that the pressing means **32a''** instead of the pressing roller **32a** and the holder **32f''** instead of the roller holder **32f** are included in the pressing bearing mechanism **32''.**

In Figure **3(c),** the same components as those in Figures **3(a)** are denoted by the same reference numerals, and the description thereof will be omitted.

The pressing means readily rolls along the scribing line since a bearing is used as a pressing means.

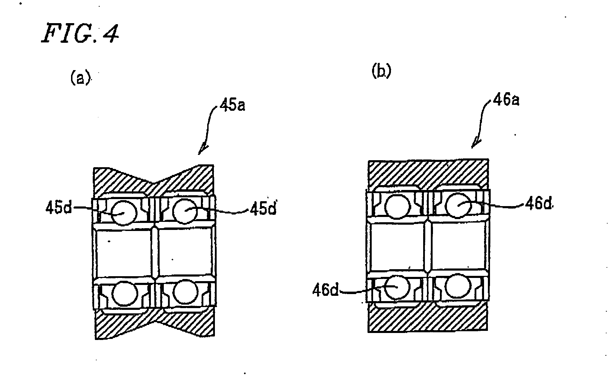

Figure **4** is a cross-section view of a holding mechanism.

Figure **4(a)** is a cross-section view of a substrate holding roller **45a.**

An outer circumferential surface of the substrate holding roller **45a** is formed in a V-shape with the center portion in the width direction recessed except that side edge portions of both sides in the width direction are not recessed but flat. The dimension in the width direction of the substrate holding roller **45a** is in a range of about 8 mm to about 24 mm. The substrate holding roller **45a** holds portions of both sides of the scribing line by bridging the scribing line, these portions being distant about 4 mm to 12 mm from the scribe line.

The substrate holding roller **45a** is attached to the supporting axis by the pair of the bearing **45d,** this supporting axis being arranged in a direction orthogonal to the sliding direction of the scribing unit **40.** Each of inner circular portions of the pair of the bearings **45d** is respectively projected outside from each end face of the substrate holding roller **45a.** As a result, the supporting axis which is attached to the substrate holding roller **45a** is readily detachable from the roller holder.

The substrate holding roller **45a** is formed of polyacetals, polyurethane rubber (rubber hardness Hs 20° to 90° ), etc.

Figure 4 **(b)** is a cross-section view of a first roller auxiliary roller **46a.**

An outer circumferential surface of the first auxiliary roller **46a** is formed flat. The first auxiliary roller **46a** is attached to the supporting axis by the pair of the bearings **46d,** this supporting axis being arranged in a direction (Y direction) orthogonal to the sliding direction (X direction) of the scribing unit **40.** The dimension in the width direction of the first auxiliary roller **46a** is approximately the same as the dimension in the width direction of the substrate holding roller **45a.** Each of inner circular portions of the pair of the bearings **46d** is respectively projected outside from each end face of the first auxiliary roller **46a.** As a result, the supporting axis is readily detachable from the roller holder.

The second auxiliary roller **47a,** the first auxiliary roller on the pressing side **33a** and the second auxiliary roller on the pressing side **34a,** for example, also have the same structure as that of the first auxiliary roller **46a.**

The first holding means (holding mechanism) moves (rolls) to sequentially cut the brittle substrate from one end face of the brittle substrate to the other end face of the brittle substrate while the first holding means and the pressing means (pressing mechanism) oppose to each other with brittle substrate therebetween. Therefore, the brittle substrate is cut without forming a plurality of starting points of cutting. As a result, a cut face is formed without having unevenness on the brittle substrate.

In the case where a roller, a conveyor or a bearing is used as a first holding means (holding mechanism), the first holding means readily rolls along the scribing line.

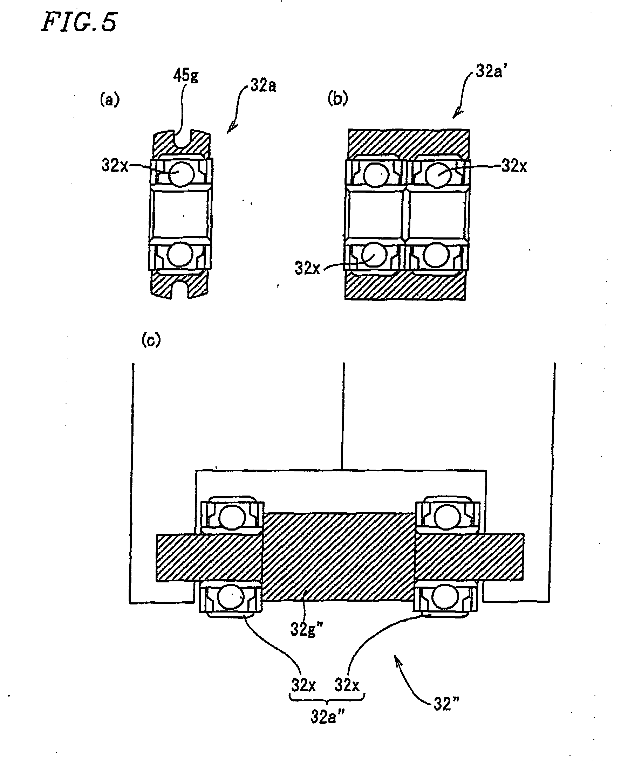

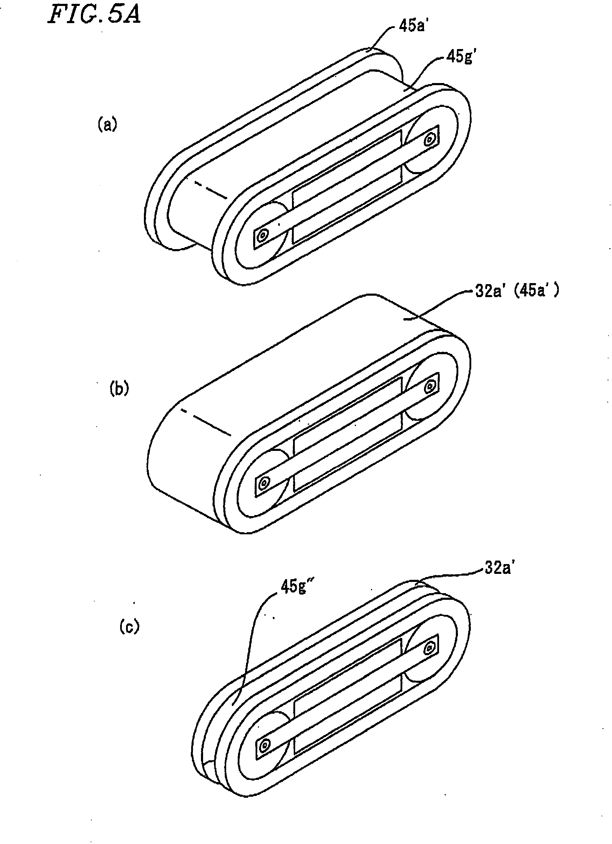

Figure **5** is a cross-section view of the pressing mechanism.

Figure **5(a)** is a cross-section view of the pressing roller **32a.**

The center portion of the outer circumference surface of the pressing roller **32a** in the width direction is projected in an arc. An U-shaped groove section **45g** is formed in the center portion of the outer circumference surface in the width direction. The dimension of the groove section **45g** in the width direction is in a range of about 2 mm to 6 mm. The outer circumference surface of the pressing roller **32a** presses a portion which is about 1 mm to 3 mm distant from the scribing line.

In this manner, the groove section **45g** is formed in the pressing roller **32a** such that the pressing roller **32a** does not contact with a line on the surface on which the scribing line is not formed, this line opposing the scribing line.

The pressing roller **32a** is rotatably attached to the supporting axis **32g** (see Figure **3)** by one of the bearings **32x,** this supporting axis being arranged in a direction (Y direction) orthogonal to the sliding direction (X direction) of the breaking unit **30.** Accordingly, the length of the pressing roller **32a** in the width direction is about one half of that of the substrate holding roller **45a** and respective auxiliary rollers **46a, 47a, 33a.** The inner circular portions of the bearing **32x** are also respectively protruded outside from each end face of the substrate holding roller **45a.** Therefore, the supporting axis **32g** is readily detachable from the roller holder **32f** (see Figure 3).

The pressing roller **32a** is formed of polyacetals, polyurethane rubber (rubber hardness Hs 20° to 90° ), etc. When the glass substrate **90** is cut, the pressing roller **32a** opposes the substrate holding roller **45a.** In such a case, the center line of the pressing roller **32a** in the width direction matches the center line of the substrate holding roller **45a** in the width direction.

The brittle substrate is expanded by the pressing roller **32a** and the substrate holding roller such that areas on both sides of the scribing line formed on the substrate are separated from each other. Due to this, a vertical crack which is generated when the scribing line is formed is readily extended in the thickness direction of the brittle substrate.

Figure **5(b)** is a cross-section view of a pressing conveyor mechanism **32',** which is another example for the pressing mechanism **32.**

An outer circumferential surface of the pressing conveyor mechanism **32'** is formed flat, which corresponds to the conveyor shown in Figure **5 A (b).** The pair of the bearings **32x** is supported within a conveyor holder by the two supporting axes **32g'** (see Figure **3(b)**). The pressing conveyor **32a'** is provided along the sliding direction **(X** direction) of the breaking unit **30** so as to be movable in a circle.

Figure **5(c)** is a cross-view of a pressing bearing mechanism **32''**, which is another example for the pressing mechanism **32.**

The pressing bearing mechanism **32''** includes a supporting axis **32g''** and a pressing means **32a''**.

The supporting axis **32g"** is elastic. The supporting axis **32g''** includes, for example, at least one of an engineering plastic and an engineering rubber. The outer diameters of the two side portions of the supporting axis **32g''** are smaller than the outer diameter of the center portion of the supporting axis **32g''.**

The pressing means **32a''** includes two pressing bearings **32x.** Each of the two pressing bearings **32x** is inserted by being pressed into each of both side portions of the supporting axis **32g''.**

The supporting axis **32g''** is elastic. Therefore, when both sides of the scribing line formed on the brittle substrate is pressed by the pressing means **32a''**, the pressing bearing **32x** can expand the areas on both sides of the scribing line such that areas on both sides of the scribing line formed on the brittle substrate are separated from each other. As a result, a vertical crack which is formed at the time when the scribing line is formed is readily extended in the thickness direction of the brittle substrate.

The pressing bearing mechanism **32''** can be used as the first holding means (holding mechanism). When the pressing bearing mechanism **32''** is used as the first holding means (holding mechanism), the two pressing bearings **32x** function as the two holding bearings **32x.** When the distance between the pair of the holding bearings **32x** is larger than the width of the pressing means, the brittle substrate is more readily cut since the pressing means goes under the holding means, so that the pressed portion bends.

Figure **5A (a)** shows a holding conveyor **45a'.** The holding conveyor **45a'** functions as a conveyor for the first holding means (holding mechanism). The holding conveyor **45a'** is provided so as to be movable in a circle along the sliding direction (X direction) of the scribing unit **40.** In the holding conveyor **45a',** the groove section **45g'** is formed such that the holding conveyor **45a'** does not contact with the scribing line.

The holding conveyor **45a'** can expand areas on both sides of the scribing line such that areas on both sides of the scribing line formed on the substrate are separated from each other. As a result, a vertical crack which is formed at the time when the scribing line is formed readily extends in the thickness direction of the brittle substrate.

Figure **5A (b)** is a perspective view showing a pressing conveyor mechanism **32',** which is another example for the pressing mechanism **32.** An outer circumference of the pressing conveyor mechanism **32'** is formed flat. The pressing conveyor **32a'** can be used as the holding conveyor **45a'.**

Figure **5A(c)** is a perspective view showing a pressing conveyor mechanism **32a',** which is another example for the pressing mechanism **32.** The pressing conveyor mechanism **32a'** is provided so as to be movable in a circle along the sliding direction (X direction) of the scribing unit **40.** The groove section **45g''** is formed in the pressing conveyor mechanism **32a'** such that the pressing conveyor mechanism **32a'** does not contact with a line on the surface on which the scribing line is not formed, this line opposing the scribing line.

The pressing convey or mechanism **32a**' can expand areas on both sides of the scribing line such that areas on both sides of the scribing line formed on the substrate are separated from each other. As a result, a vertical crack which is formed at the time when the scribing line is formed readily extends in the thickness direction of the brittle substrate.

When the pressing conveyor **32a'** shown in Figure **5A(c)** is used as a pressing means, the holding conveyor mechanism **45a'** shown in Figure **5A (a)** is used as a first holding means, and the groove section **45g'** of the first holding means is wider than that of the pressing means, the brittle substrate is more readily is cut since the pressing means goes under the first holding means to bend the pressed portion.

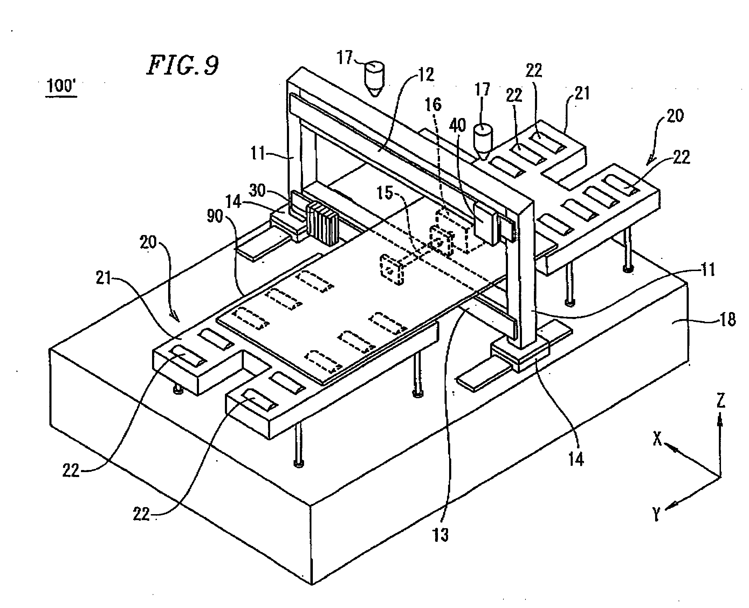

Figure **9** is a perspective view schematically showing a structure, which is another example for the cutting apparatus **100.**

In a cutting apparatus **100'** which is another example of the cutting apparatus **100,** the breaking unit **30** is attached to the lower guide rail **13** so as to be slidable and the scribing unit **40** is attached to the upper guide rail **12** so as to be slidable.

According to a brittle substrate cutting system (cutting apparatus **100** and cutting apparatus **100')** of the present invention, a pressing force upon a second surface of the brittle substrate is moved along the scribed line formed on a first surface of the brittle substrate while the first surface of the brittle substrate (glass substrate **90)** is held, this second surface of the brittle substrate opposing the first surface of the brittle substrate. In this manner, while the pressing force is moved along the scribing line formed on the first surface of the brittle substrate, the pressing force is applied to the second surface of the brittle substrate, this second surface opposing the first surface of the brittle substrate. Therefore, a bending moment is applied to the brittle substrate such that a vertical crack extending from the scribing line extends in the thickness direction of the substrate to cut the brittle substrate.

According to the cutting apparatus of the present invention, the glass substrate **90** on which the scribing line is formed is positively cut along the scribing line. Moreover, a working efficiency improves since the glass substrate **90** is cut immediately subsequent to the formation of the scribing line. Furthermore, unnecessary force is not applied to a scribe line **S** which is not cut when the glass substrate **90** is cut, There is no possibility that chippings occur at the end face of the cut glass substrate since the cut glass substrates **90** do not bend.

### 2. Substrate cutting method

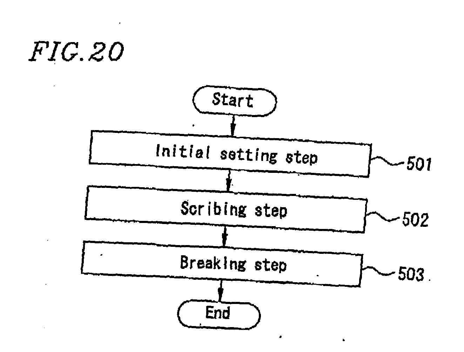

Figure **20** shows a procedure of cutting a substrate according to the embodiments of the present invention.

Hereafter, the procedure of cutting the glass substrate **90** by the cutting apparatus **100** will be described in step by step.

The procedure of cutting the glass substrate **90** by the cutting apparatus **100** includes a scribing step and a breaking step. An initial setting step is performed as appropriate.

Step **501**: The initial setting step is performed. The initial setting step is a step of setting an initial state for the substrate cutting apparatus **100** prior to the start of the scribing step.

When the initial setting step is completed, the process proceeds to Step **502.**

Step **502:** The scribing step is performed. The scribing step is a step of forming a scribing line on the glass substrate **90.** The scribing step will be described later in detail.

When the scribing step is completed, the process proceeds to Step **503.**

Step **503:** The breaking step is performed. The breaking step is a step of breaking the glass substrate **90,** on which the scribing line is formed, along the scribing line. The breaking step will be described later in detail.

When the breaking step is completed, theprocessends.

### 2-1. Initial setting step and scribing step

Hereafter, the initial setting step (Step **501**) and the scribing step (Step **502**) according to an embodiment of the present invention will be described.

A glass substrate **90** is transported onto a supporting table **21** included in one of a pair of substrate supporting mechanisms **20.** A plurality of transporting rollers **22** moves upward, so that the glass substrate **90** is supported by the plurality of transporting rollers **22.** When the plurality of transporting rollers **22** rotate, the glass substrate **90** moves toward the other supporting table **21** of the pair of the substrate supporting mechanisms **20.**

Next, the glass substrate **90** is transported so as to be bridged between the pair of the substrate supporting mechanisms **20.** When a predetermined cutting line of the glass substrate **90** is positioned in the vicinity of the scribing line formed by the scribing unit **40** between the pair of the substrate supporting mechanisms **20,** the plurality of transporting rollers **22** moves downward. The glass substrate **90** is adsorbed by a plurality of adsorbing holes formed in the pair of the substrate supporting mechanisms **20,** thereby the glass substrate **90** being fixed on the pair of the supporting tables **21.**

An inclination with respect to an X direction of the glass substrate **90,** a starting position of scribing and a finishing position of scribing on the glass substrate are calculated based on images of a pair of alignment marks and a glass size of the glass substrate **90,** a position data of the pair of the alignment marks, etc, the images of the pair of the alignment marks formed on the glass substrate **90** being captured by the positioning cameras **17.**

Next, the breaking unit **30** is slid from a waiting position of one edge portion (+X side) of the upper guide rail **12** to a side edge of -X side of the glass substrate **90,** so that the pressing roller **32a** opposes the starting position of scribing for the glass substrate **90** (see Figure **2).** The scribing unit **40** is slid from a waiting position of one edge portion (+X side) of the lower guide rail **13** to a side edge of -X side of the glass substrate **90.** The notch forming cutter mechanism **44** is positioned at a side of the starting position of scribing for the glass substrate **90.**

Next, the pressing roller **32a** is moved downward by a motor (not shown) for moving upward/downward included in the pressing roller mechanism. While the pressing roller **32a** is pressed against an upper surface of the glass substrate **90,** the notch forming cutter mechanism **44** is moved upward by the air cylinder **44b** for moving upward/downward.

Next, the breaking unit **30** and the scribing unit **40** are slid a predetermined distance in the scribing direction (+X direction) in synchronization in order to form a notch at the starting position of scribing for the glass substrate **90,** this notch being formed by the edge portion **44a** included in the notch forming cutter mechanism **44.** As a result, the notch is formed at the starting position of scribing for the glass substrate **90** which is held by the pressing roller **32a,** this notch being formed by the edge portion **44a** of the notch forming cutter mechanism **44.**

Next, when the notch with a predetermined length is formed at the starting position of scribing on a lower surface of the glass substrate **90,** the pressing roller mechanism **33** is moved upward and the cutting mechanism **44** for making a notch is moved downward.

Next, the breaking unit **30** is slid a predetermined distance in the scribing direction (+X direction), so that the center portion of the laser beam/cooling water receiving section **35** matches an optical axis of the laser beam irradiating optical system **43.** The nozzle section **42a** of the cooling mechanism **42** is moved to a cooling water spraying position located above by the air cylinder **42b** for moving upward/downward.

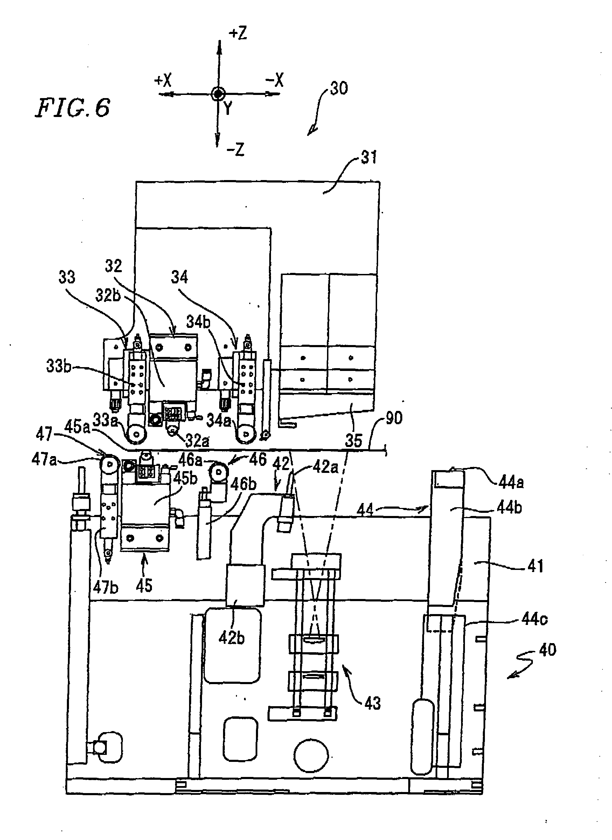

Figure **6** shows a state in which the center portion of the laser beam/cooling water receiving section **35** matches the optical axis of the laser beam irradiating optical system **43** and the nozzle section **42a** of the cooling mechanism **42** is moved to a cooling water spraying position located above by an air cylinder **42b** for moving upward/downward.

Next, the breaking unit **30** and the scribing unit **40** are slid in the scribing direction (+X direction) in synchronization and the cooling water from the nozzle section **42a** is sprayed upward. Furthermore, a laser beam from the laser beam irradiating optical system **43** is irradiated upward. While the laser beam is irradiated along a line to be cut (line to be scribed) of the glass substrate **90,** the vicinity of the portion where the laser beam is irradiated is cooled by the cooling water. Therefore, a vertical crack is continuously formed along a position to be cut of the glass substrate **90** from the notch provided at the starting position of scribing for the glass substrate **90.**

The driving section for linear interpolation is driven in order that the laser beam irradiated from the laser beam irradiating optical system **43** is irradiated along the line to be cut of the glass substrate **90.** In other words, in order to address the inclination of the glass substrate **90,** while the breaking unit **30** and the scribing unit **40** are slid, the upper guide rail **12** and the lower guide rail **13** are side in a direction (Y direction) which is orthogonal to the sliding direction. Thereafter, the laser beam is irradiated along the line to be cut of the glass substrate **90.**

When the breaking unit **30** and the scribing unit **40** are slid from one side edge to the other side edge of the glass substrate **90,** a continuous vertical crack is formed along the line to be cut (line to be scribed) of the glass substrate **90,** thereby a scribing line form one side edge to the other side edge of the glass substrate 90 being formed.

Up to this point, the initial setting step (Step **501)** and the scribing step (Step **502)** according to Embodiment 1 of the present invention have been described.

### 2-2. Breaking step

A breaking step is, for example, performed on the glass substrate **90** on which the scribing line is formed at the scribing step.

Hereafter, the breaking step (Step **503)** according to Embodiment 1 of the present invention will be described in detail.

When the scribing line is formed on the glass substrate **90,** the laser beam irradiated from the laser beam irradiating optical system **43** is stopped and the cooling water spraying from the cooling mechanism **42** is also stopped. The nozzle section **42a** is returned to the waiting position located below.

Next, the breaking unit **30** on the upper side is slid in an opposite direction (-X direction) to the scribing direction, so that the pressing roller **32a** opposes an edge portion of the formed scribing line on -X side. The scribing unit **40** on the lower side is slid such that the substrate holding roller **45a** opposes the edge portion of the scribing line on -X side.

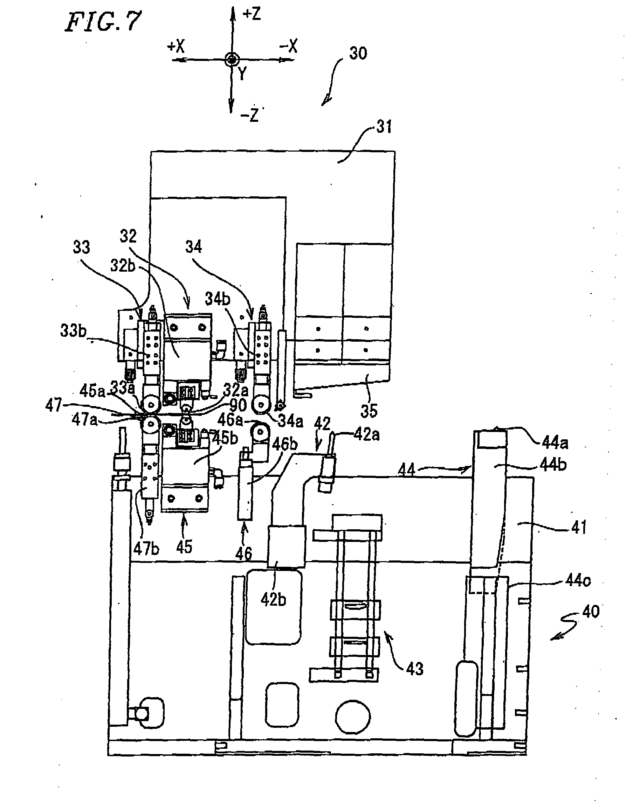

Figure **7** shows a state in which the breaking unit **30** and the scribing unit **40** oppose each other.

Next, while the first auxiliary roller **46a** is moved upward by the air cylinder **46b** for moving upward/downward, the second auxiliary roller **47a** is moved upward by the air cylinder 47b for moving upward/downward. The second auxiliary roller **47a** contacts a lower surface of the glass substrate **90.** Furthermore, when the substrate holding roller **45a** is moved upward by the motor (not shown) for moving the head section **45b** upward/downward, the substrate holding roller **45a** contacts the lower surface of the glass substrate **90** with a predetermined pressure.

Next, the first auxiliary roller **33a** on the pressing side moves downward to contact an upper surface portion of the glass substrate **90,** this upper surface portion opposing the position which the second auxiliary roller **47a** contacts. The pressing roller **32a** is moved downward by the motor (not shown) for moving the head section **32d** upward/downward to be contacted upon the upper surface portion of the glass substrate **90** with a predetermined pressure, this upper surface portion opposing the substrate holding roller **45a.**

Furthermore, the second auxiliary roller **34a** on the pressing side moves downward after moving to the vicinity of the end face portion of the glass substrate **90** on -X side. Thereafter, the second auxiliary roller **34a** on the pressing side contacts the upper surface portion of the glass substrate **90** which corresponds to the position the first auxiliary roller **46a** contacts.

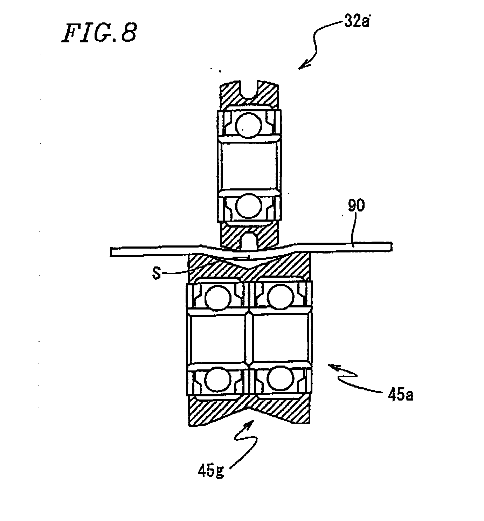

Figure **8** show a state in which the pressing roller **32a** with an outer circumferential surface thereof recessed in a V-shape and flat side edge portions on both sides of the substrate holding roller **45a** in the width direction are pressed upon both sides of the scribing line formed on the glass substrate **90.**

The center portion of the U-shaped groove section **45g** of the substrate holding roller **45a** opposes the scribing line S formed on the glass substrate **90,** this U-shaped groove section **45g** being formed in the center portion of the substrate holding roller **45a** in the width direction. The groove section **45g** formed in the substrate holding roller **45a** is formed such that the substrate holding roller **45a** does not contact with the scribing line **S.** The groove section formed in the pressing roller **32a** is formed such that the pressing roller **32a** does not contact with the line opposing the scribing line **S.**

The pressing roller **32a** is pressed upon the upper surface portion of the glass substrate **90** which is adjacent to the scribing line **S,** not upon the lower surface portion of the glass substrate **90** which is held by side edge portions of both sides of the substrate holding roller **45a** since the dimension of the pressing roller **32a** in the width direction is smaller than that of the substrate holding roller **45a** (e.g., the dimension of the pressing roller **32a** is about one half of that of the substrate holding roller **45a).** The pressing roller **32a** is, for example, set so as to reach the position of equal to or more than 0.3 mm from the upper surface of the glass substrate **90.** Accordingly, the glass substrate **90** is bent so as to project downward with the scribing line at the center. The vertical crack at the edge portion of the scribing line **S** on -X side extends in the thickness direction of the glass substrate **90** to reach the upper surface of the glass substrate **90,** this vertical crack being formed on the lower surface of the glass substrate **90.** As a result, the glass substrate **90** is broken.

In this manner, when a groove section is formed in the pressing roller **32a** such that the pressing roller **32a** does not contact with the line on the second surface of the glass substrate **90,** this line opposing the scribing line **S,** the pressing roller **32a** presses upon both sides of the line on the second surface of the glass substrate **90** so as not to contact the line, on the second surface of the brittle substrate, opposing the scribing line when the glass substrate **90** is cut along the scribing line. Therefore, occurrence of chippings at the cut face portion is prevented during the cutting process.

A groove section is formed in the substrate holding roller **45a** so as not contact the scribing line. Therefore, when the glass substrate **90** is cut along the scribing line, the substrate holding roller **45a** can hold both sides of the scribing line so as not to contact the scribing line. Therefore, occurrence of chippings at the cut face portion is prevented during the cutting process.

When the width of the groove section formed in the substrate holding roller **45a** is larger than that of the pressing roller **32a,** the glass substrate **90** is positively cut along the scribing line since a portion of the pressing roller **32a** goes under the groove section of the substrate holding roller **45a,** thereby the glass substrate **90** likely to bend.

Next, when breaking of the glass substrate **90** is started along the scribing line at the position of edge portion of the scribing line on -X side, the pressing roller **32a** is slightly moved upward. As a result, the amount to which the pressing roller **32a** presses into the glass substrate **90** slightly decreases. In this case, the pressing roller **32a** is set so as to reach the position of equal to or less than 0.3 mm from the upper surface of the glass substrate **90.**

Next, the breaking unit **30** and the scribing unit **40** are slid in the scribing direction (+X direction) in synchronization. As a result, the pressing roller **32a** is pressed against the both side portions of the scribing line **S,** which is held by the substrate holding roller **45a,** so that the substrate holding roller **45a** and the pressing roller **32a** respectively rolls on the upper surface and the lower surface of the glass substrate **90** to continuously break the glass substrate **90** along the scribing line **S** from the position of the edge portion of the scribing line **S** on -X side.

The first auxiliary roller **33a** on the pressing side and the second auxiliary roller **47a** positioned ahead of the pressing roller **32a** in the sliding direction hold the area ahead of the scribing line to be cut by pressing from both directions. Therefore, when the glass substrate **90** is broken along the scribing line by the pressing force of the pressing roller **32a,** occurrence of chippings, fractures, etc, which are the cause for a product defect after the glass substrate is cut, is prevented. An unnecessary force generated within the glass substrate **90** being bent is prevented from affecting on the portion being broken.

The glass substrate **90** which is cut along the scribing line **S** while being broken is held by the first auxiliary roller **46a** and the second auxiliary roller **34a** on the pressing side which are arranged at a predetermined distance from the substrate holding roller **45a,** Therefore, bending of the cut glass substrate **90** is prevented. Since an unnecessary force does not work on the portion being broken, there is not possibility that chippings, fractures, etc, which are the cause for a product defect after the glass substrate **90** is cut, occurs.

In this manner, when the breaking unit **30** and the scribing unit **40** are slid in the scribing direction (+X direction) and reach the side edge of the glass substrate **90** on +X side, the glass substrate **90** is cut along the entire scribing line **S.**

Next, the second auxiliary roller **47a** is moved downward, the substrate holding roller **45a** is moved downward, and then the first auxiliary roller **46a** is moved downward, so that all of the rollers are separated from the lower surface of the glass substrate **90.** The first auxiliary roller **33a** on the pressing side is moved upward, the pressing roller **32a** and the second auxiliary roller **34a** on the pressing side are moved upward, so that all of the rollers are separated from the glass substrate **90.**

Next, the breaking unit **30** and the scribing unit **40** are respectively slid to move to the waiting position of the edge portions of the upper guide rail **12** and the lower guide rail **13.**

Up to this point, the breaking step (Step **503**) according to the embodiment of the present invention has been described in detail.

According to the cutting method of the present invention, the glass substrate **90** on which the scribing line is formed is positively cut along the scribing line. Moreover, a working efficiency improves since the glass substrate **90** is cut immediately subsequent to the formation of the scribing line. Furthermore, unnecessary force is not applied to the uncut scribe line **S** when the glass substrate **90** is cut. There is no possibility that chippings occur at the end face of the cut glass substrate since the cut glass substrate **90** does not bend.

### <Embodiment 2>

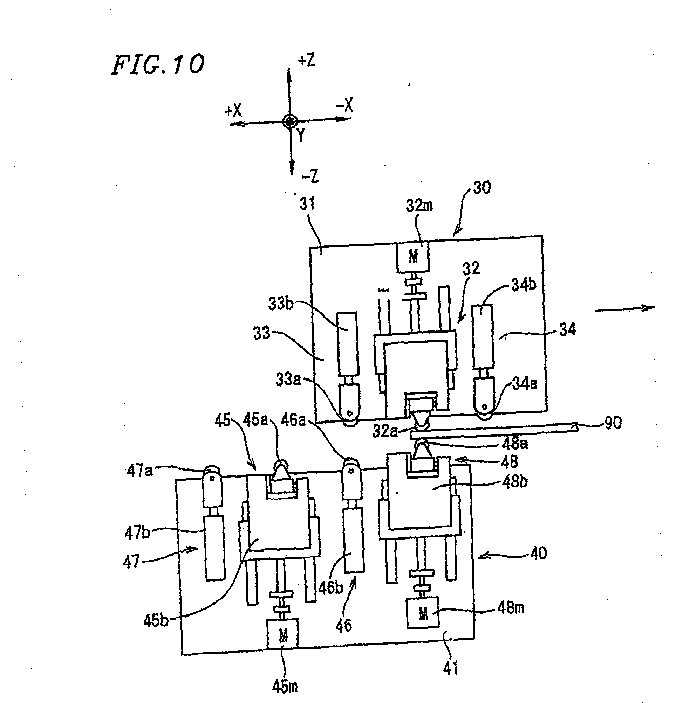

Figure **10** is a view schematically showing a breaking unit **30** and a scribing unit **40** according to Embodiment 2 of the present invention.

In Embodiment 2 of the present invention, a laser beam irradiating optical system **43** and a cooling mechanism **42** which are arranged in Embodiment 1 of the present invention are not provided in the scribing unit **40.** A scribing cutter mechanism **48** is provided instead of the notch forming cutter mechanism **44.**

In the scribing cutter mechanism **48,** a cutter wheel tip **48a** is rotatably provided at upper end portion of a cutter head **48b,** which is movable upward/downward, attached to the scribing unit body **41.** As a cutter wheel tip **48a,** a wheel cutter in which recessed portions are provided on an outer circumference ridge with a predetermined distance is preferably used, wherein the wheel cutter is disclosed in Japanese Laid-Open Publication No. 09-188534. However, a normal cutter wheel tip may be used.

Instead of the cutter wheel tip **48a,** a cutter wheel can be used in which a pressing force (load), applied to a cutter by applying a vibrating force involved with a surrounding elasticity of an oscillating actuator, periodically changes, this cutter being pressed upon a surface of a brittle material substrate thereby, pinpoint shock being applied to the brittle material substrate. One example is disclosed in Japanese patent No. 2954566. Accordingly, the example is not described in detail herein.

The cutter head **48b** moves upward/downward by a ball screw mechanism having a motor **48m.**

In the case where a cutter is used as a scribing ling forming means, a scribing line is stably formed due to a wide selection for conditions of forming a scribing line. In the case where a disk-shaped cutter wheel tip is used as a cutter and edge portions are formed in an outer circumferential edge of the cutter wheel tip, a scribing line is formed while the cutter wheel tip is pressed and rotated on the brittle substrate. Therefore, a speed (scribing forming speed) of forming a scribing line is improved.

In the case where a plurality of recessed portions are formed in ridge-shaped sections of the edge portions with a predetermined distance, a plurality of protrusions are formed at positional location except where the plurality of recessed portions are formed. When a scribing line is formed, the plurality of protrusions applies a pinpoint shock upon a first surface of the brittle substrate. Therefore, a vertical crack which extends up to about 90% of the thickness of the brittle substrate is formed. As a result, the brittle substrate is positively cut after the breaking step.

In the case where a cutter is movable separately from a pressing means, a brittle substrate on which a scribing line is formed is cut when the pressing means follows the cutter at the time the scribing line is formed. While the scribing line is formed on the first surface of the brittle substrate, a second surface of the brittle substrate is pressed by the pressing means. Therefore, the scribing step and the breaking step are approximately simultaneously performed. Accordingly, time for a cutting step is reduced.

Similar to the scribing unit **40** of the cutting apparatus according to Embodiment 1, in the scribing unit body **41** according to Embodiment 2, a first auxiliary roller mechanism **46** is provided adjacent to a cutter mechanism **48** for scribing, and a substrate holding roller mechanism 45 and a second auxiliary roller mechanism **47** are provided adjacent to the first auxiliary roller mechanism **46.** In the cutting apparatus according to Embodiment 2 of the present invention, the substrate holding roller mechanism **45** is moved upward/downward by the ball screw mechanism having the motor **45m.** The other structures for the scribing unit body **41** are essentially the same as those for the previously-described scribing unit **40.**

Similar to the breaking unit **30** of the cutting apparatus according to Embodiment 1, in the breaking unit **30** according to Embodiment 2, a pressing roller mechanism **32,** a first auxiliary roller mechanism **33** on the pressing side and a second auxiliary roller mechanism **34** on the pressing side are provided in a breaking unit body **31.** The pressing roller mechanism **32 is** moved upward/downward by a ball screw mechanism having a motor **32m.** The structures of the breaking unit **30** according to Embodiment 2 are essentially same as those for the breaking unit **30** according to Embodiment 1.

In the cutting apparatus having the breaking unit **30** and the scribing unit **40** with such structures according to Embodiment 2 of the present invention, while the cutter wheel tip **48a** is positioned at a side edge of a starting position (on +X side of a glass substrate **90**) of forming a scribing line, the pressing roller **32a** is positioned so as to oppose the cutter wheel tip **48a.** The breaking unit **30** and the scribing unit **40** are slid in synchronization in the scribing direction (-X direction), and thereafter, the cutter wheel tip **48a** is pressed and rotated along a line to be cut (line to be scribed) of the glass substrate **90**. Thereby, the scribing line is formed along the line to be cut (line to be scribed).

When the scribing line is formed on the glass substrate **90,** the breaking unit **30** and scribing unit **40** are slid in synchronization in a direction (+X direction) opposite to the scribing direction by the cutter wheel tip **48a.**

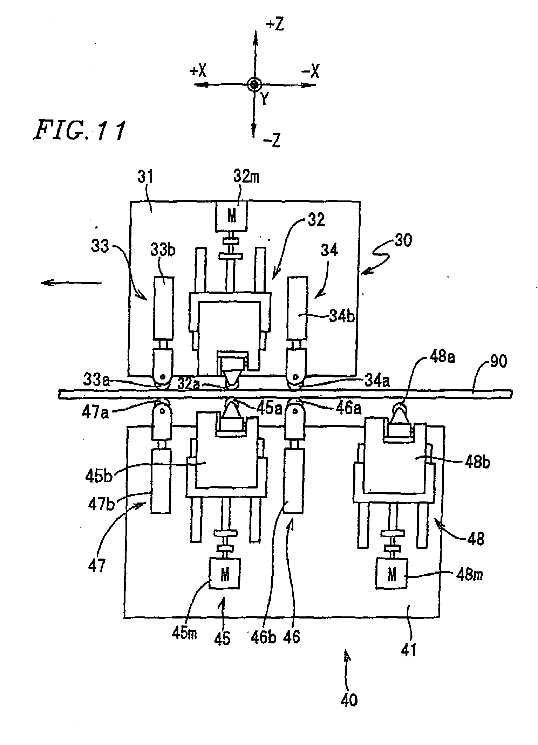

Figure 11 shows that the glass substrate **90** is cut along the scribing line when the pressing roller **32a** is sequentially pressed upon both side portions of the scribing line of the glass substrate **90** which is held by the substrate holding roller **45a.**

The second auxiliary roller mechanism **47** moves on a surface of the glass substrate **90** along the scribing line while holding the glass substrate **90** and the first auxiliary roller mechanism **33** on the pressing side moves on a surface of the glass substrate **90** along the scribing line while holding the glass substrate **90.**

The holding means is moved along the scribing line while holding the uncut portions of the area on which the scribing line is formed, thereby preventing an unnecessary force being applied to the areas which are being pressed by the pressing means. As a result, chippings at the cut face portion formed on the glass substrate **90** can be prevented.

Since the substrate holding roller mechanism **45,** the second auxiliary roller mechanism **47,** the first auxiliary roller mechanism **46** and the pressing means move at the same speed, the glass substrate **90** is firmly held by the second auxiliary roller mechanism **47** and the first auxiliary roller mechanism **46.**

The first auxiliary roller mechanism **46** is moved on a surface of the glass substrate **90** along the scribing line while holding the cutportions of the area on which the scribing line is formed, and the first holding means is moved along the scribing line while the second auxiliary roller mechanism **34** on the pressing side holds the glass substrate **90,** thereby preventing an unnecessary force being applied to the areas which are being pressing by the substrate holding roller mechanism **45.** As a reault, chippings at the cut face portion formed on the brittle substrate can be prevented.

### <Embodiment 3>

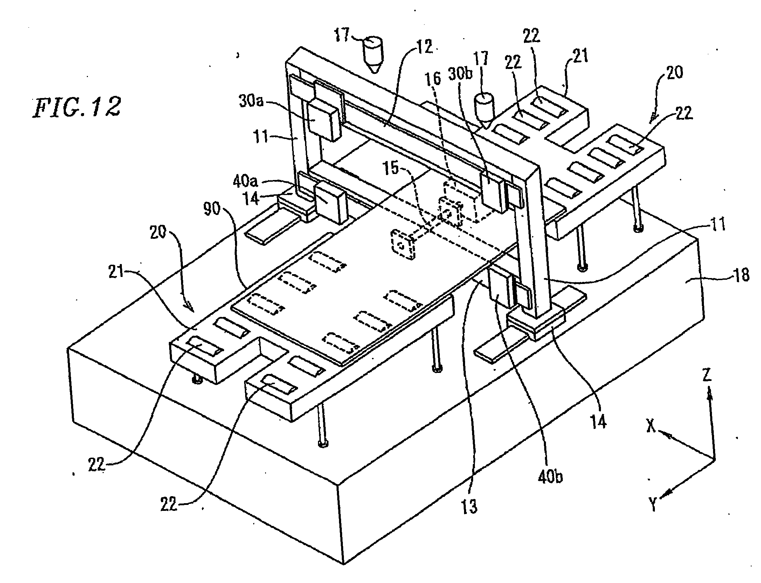

Figure **12** is a perspective view showing a cutting apparatus according to Embodiment 3 of the present invention.

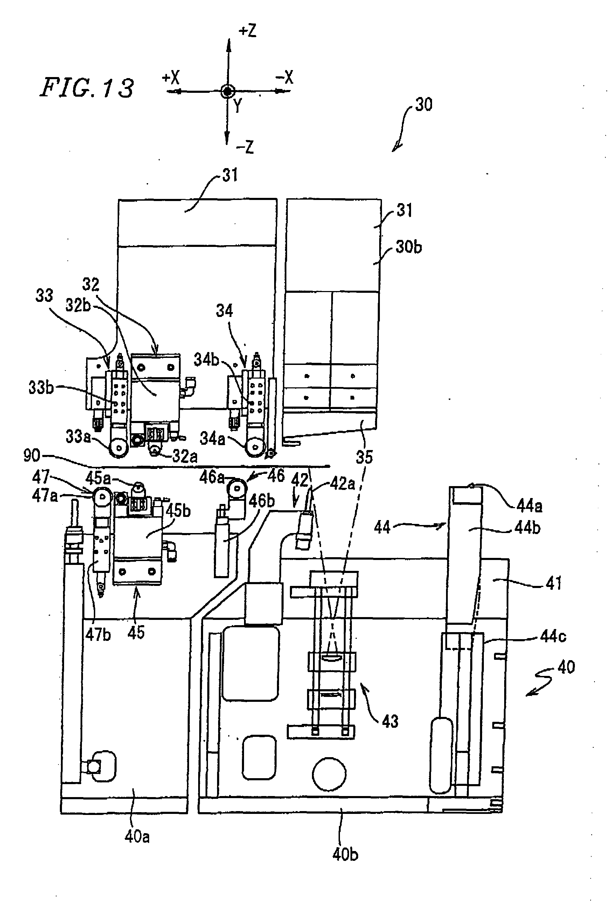

Figure **13** is a front view showing a breaking unit **30** and a scribing unit **40** included in the cutting apparatus according to Embodiment 3 of the present invention.

The breaking unit **30** included in the cutting apparatus according to Embodiment 3 of the present invention includes a first upper unit **30a** and a second upper unit **30b.** The first upper unit **30a** includes the pressing roller mechanism **32,** the first auxiliary roller mechanism **33** on the pressing side and the second auxiliary roller mechanism **34** on the pressing side of the breaking unit **30** according to Embodiment 1. The second upper unit **30b** includes a laser beam/cooling water receiving section **35.** Since the laser beam/cooling water receiving section **35** prevents diffusion of at least one of a laser beam and a cooling medium, thereby improving the safety of the cutting apparatus **100.** The first upper unit **30a** and the second upper unit **30b** are respectively separately slid along the upper guide rail **12** powered by a linear motor mechanism.

The scribingunit **40** included in the cutting apparatus according to Embodiment 3 of the present invention includes a first lower unit **40a** and a second lower unit **40b.** The first lower unit **40a** integrally includes a first auxiliary roller mechanism **46,** a substrate holding roller mechanism **45** and a second auxiliary roller mechanism **47** of the scribing unit **40** according to Embodiment 1. The second lower unit **40b** integrally includes a notch forming cutter mechanism **44** and a laser beam irradiating optical system **43** and a cooling mechanism **42.** The first lower unit 40a and the second lower unit **40b** are respectively separately slid along the lower guide rail **13** powered by a linear motor mechanism.

In this manner, according to the breaking unit **30** and the scribing unit **40** of the cutting apparatus according to Embodiment 3 of the present invention, an apparatus operation (operation for the scribing step and operation for breaking step) according to processing conditions for various brittle material substrates can be selected.

The other structures for Embodiment 3 are same as those for to Embodiment 1.

In the cutting apparatus according to Embodiment 3, when a scribing line is formed on the glass substrate **90,** similar to Embodiment 1, the first upper unit **30a** and the second lower unit **40b** are slid from the respective waiting positions and moved to the side edge portion of the glass substrate **90** on -X side, so that the pressing roller **32a** opposes the edge portion of the glass substrate **90** and the notch forming cutter mechanism **44** is positioned at a side of a starting position of forming a scribing line, which is at the edge portion of the glass substrate **90** on -X side.

Next, the pressing roller mechanism **32** moves downward and the pressing roller **32a** contacts an upper surface of the glass substrate **90** with a predetermined pressure. The notch forming cutter mechanism **44** is moved upward by an air cylinder **44c** for moving upward/downward. Next, the first upper unit **30a** and the second lower unit **40b** are slid a predetermined distance in the scribing direction (+X direction) in order that a notch is formed at the starting position of forming a scribing line for the glass substrate by an edge portion **44a** of the notch forcing cutter mechanism **44.** As a result, the notch is formed at the starting position of scribing for the glass substrate **90** by the edge portion **44a** of the notch forming cutter mechanism **44.**

When the notch is formed with a predetermined length at the starting position of forming a scribing line, then the notch forming cutter mechanism **44** of the second lower unit **40b** moves downward

Next, the second lower unit **40b** is slid and positioned so as that an optical axis of the laser beam irradiating optical system **43** matches the notch. After the first upper unit **30a** is slid to the waiting position, the second upper unit **30b** is slid from the waiting position such that the center portion of the laser beam/cooling water receiving section **35** in the sliding direction match the optical axis of the laser beam irradiating optical system **43.**

In the case where the cooling nozzle is movable along the scribing line, the cooling nozzle is moved along the scribing line. Therefore, a scribing condition can be set according to the material of the brittle substrate.

A notch is positively formed at the starting position of forming a scribing line on the glass substrate **90** by the notch forming cutter mechanism. In the case where the notch forming cutter mechanism is integrally movable with the laser beam irradiating means and the cooling means, the notch formed at the starting position of forming a scribing line, and a laser beam irradiating area and a cooling area are co-aligned. Therefore, the scribing line is accurately formed along the line on which a scribing line is to be formed.

Figure **13** shows a state in which the optical axis of the laser beam irradiating optical system **43** matches the notch, and the center portion of the laser beam/cooling water receiving section **35** in the sliding direction matches the optical axis of the laser beam irradiating optical system **43.**

Next, the second upper unit **30b** and the second lower unit **40b** are moved in synchronization in the scribing direction (+X direction), so that the scribing line is formed by the irradiation of the laser beam and the spraying of the cooling water.

Next, while the first upper unit **30b** and the second lower unit **40b** are slid to the waiting position which is at a side of the starting position of forming a scribing line, the first upper unit **30a** and the first lower unit **40a** are slid in the same direction. At the starting position of forming a scribing line, while the pressing roller **32a** is pressed against both sides of the scribing line, the substrate holding roller **45a** is pressed against the lower surface of the glass substrate **90.**

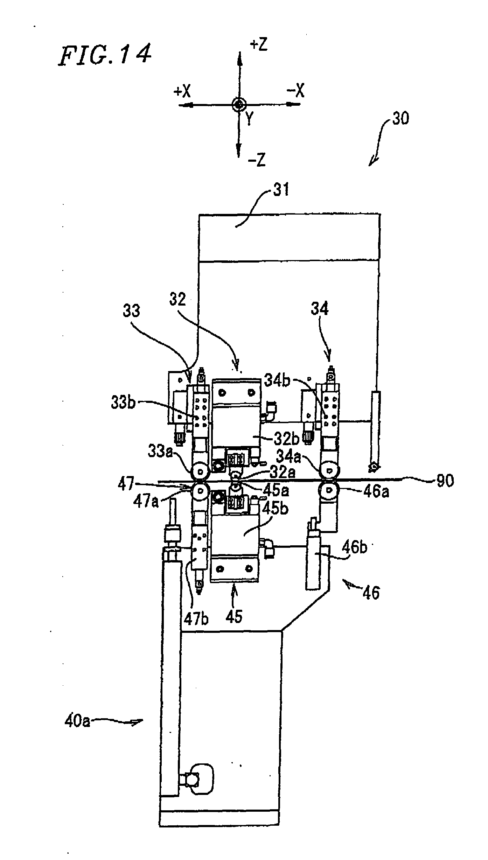

Next, when only the second upper unit **30a** and the first lower unit **40a** are slid in synchronization in the same direction (+X direction) as the scribing direction, the glass substrate **90** is broken along the scribing line by a pressing force applied by the pressing roller **32a** of the first upper unit **30a** and the substrate holding roller **45a** of the first lower unit **40a** similar to that of the above-described Embodiment 1 as shown in Figure **14.**

### <Embodiment 4>

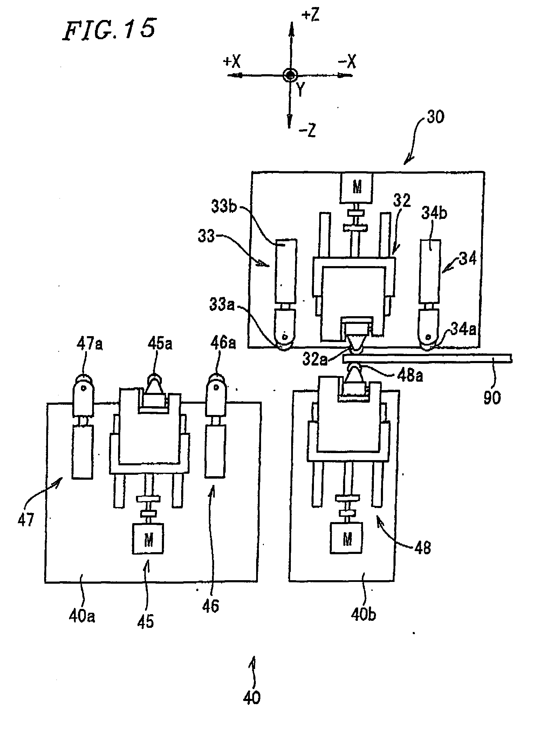

Figure **15** is a front view showing a structure of a breaking unit **30** and a scribing unit **40** provided in the cutting apparatus according to Embodiment 4 of the present invention.

The scribing unit **40** in the cutting apparatus according to Embodiment 4 includes a first lower unit 40a and a second lower unit **40b.** The first lower unit **40a** includes a first auxiliary roller mechanism **46,** a substrate holding roller mechanism **45** and a second auxiliary roller mechanism **47** of the scribing unit **40** according to Embodiment 2. The second lower unit **40b** includes a scribing cutter mechanism **48** which is separated from the first lower unit **40a**.

The first lower unit **40a** and the second lower unit **40b** are respectively separately slid along a lower guide rail **13** by powered by a linear motor mechanism.

In this manner, according to the cutting apparatus of Embodiment 4 of the present invention, an apparatus operation (operation for the scribing step and operation for breaking step) according to processing conditions for various brittle material substrates can be selected.

The other structures for Embodiment 4 are the same as those for to Embodiment 2.

In the cutting apparatus according to Embodiment 4, when the scribing line is formed on the glass substrate **90,** first, the second lower unit 40b is slid from the waiting position which is at one edge portion of the lower guide rail **13** to the starting position of forming a scribing line which is at a side edge of the glass substrate **90** on +X direction, so that a cutter wheel tip **48a** of the scribing cutter mechanism **48** opposes the starting position of forming a scribing line. A breaking unit **30** is slid as well, so that the pressing roller **32a** of the breaking unit **30** is positioned so as to oppose the cutter wheel tip **48a** (see Figure **15).**

Next, when the breaking unit **30** and the scribing unit **40** are slid in synchronization in the scribing direction (-X direction), the pressing roller and the cutter wheel tip 48a are respectively pressed against an upper surface and a lower surface of the glass substrate along a line to be cut (line to be scribed). Thereby, a scribing line is formed on the glass substrate **90** along the line to be cut (line to be scribed).

Next, the second lower unit **40b** is slid to the same direction (-X direction) as the sliding direction so as to be positioned at the waiting position, which is at a side of the glass substrate **90.**

Next, the first lower unit **40a** is slid below the pressing roller **32a** of the breaking unit **30** positioned at an end face position of the scribing line, so that the pressing roller **32a** and the substrate holding roller **45a** oppose each other with the glass substrate **90** therebetween.

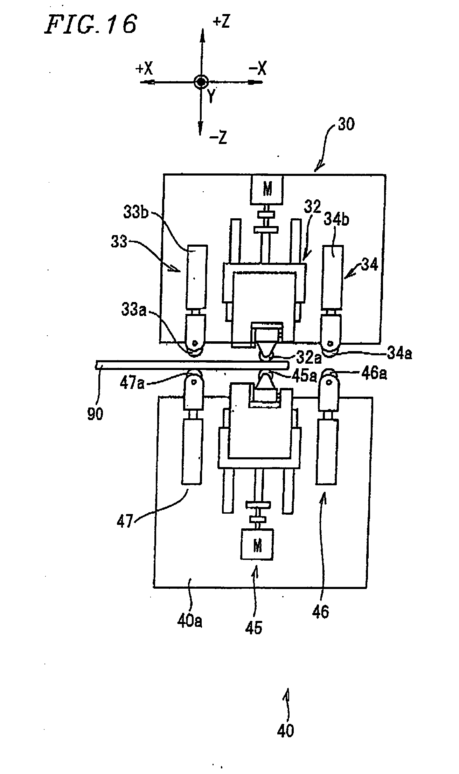

Figure **16** shows a state in which the pressing roller **32a** and substrate holding roller **45a** oppose each other with the glass substrate **90** therebetween.

Next, while the pressing roller **32a** and the substrate holding roller **45a** contact the glass substrate **90,** a first auxiliary roller **33a** on the pressing side and a second auxiliary roller **47a** respectively contact the glass substrate **90,** and the first auxiliary roller **46a** moves upward. The breaking unit **30** and the first lower unit **40a** are slid in synchronization in the opposite direction (+X direction) to the scribing direction by the cutter wheel tip **48a.**

The second auxiliary roller **34a** on the pressing side moves downward and contacts the glass substrate **90** after moving to the vicinity of an end face portion of the glass substrate **90** on -X side.

According to the cutting apparatus corresponding to Embodiment 4 of the present invention, when the breaking unit **30** and the first lower unit **40a** are slid along the entire scribing line, the pressing roller **32a** is sequentially pressed and rotated upon both side portions of the scribing line of the glass substrate **90** which is held by the substrate holding roller **45a,** so that the glass substrate **90** is cut along the scribing line.

### <Embodiment 5>

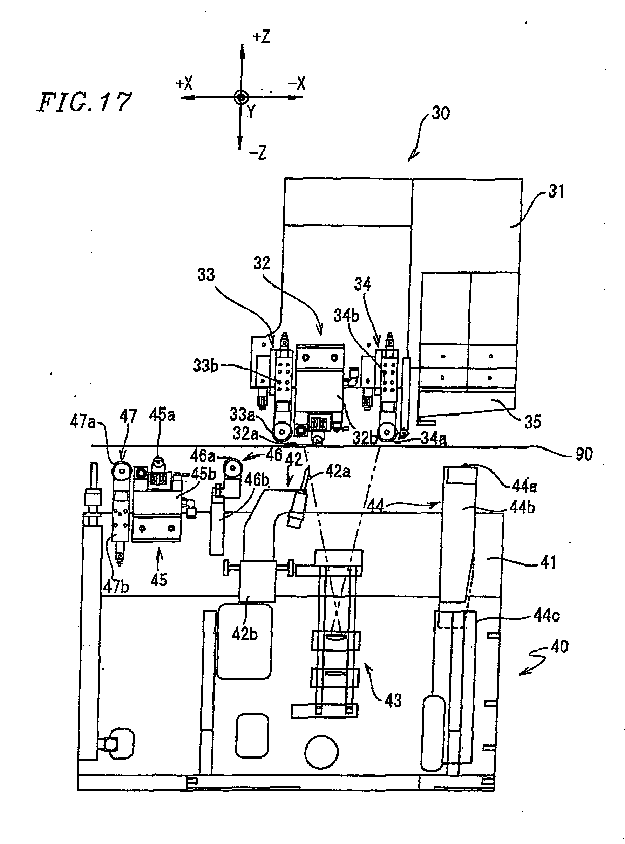

Figure **17** is a front view showing a structure of a breaking unit **30** and a scribing unit **40** provided in a cutting apparatus according to Embodiment 5 of the present invention.

In the cutting apparatus according to Embodiment 5, a nozzle section **42a** of a cooling mechanism in the scribing unit **40** according to Embodiment 1 is slidable in the sliding direction of the scribing unit **40** (see Figure **17**). The other structures for Embodiment 5 are same as those for to Embodiment 1.

In Embodiment 5, when a scribing line is formed, a pressing roller **32a** of the breaking unit **30** is pressed against an upper surface of a glass substrate **90** (see Figure **17**). Therefore, portions on which a scribing line is formed bend downward.

Next, the nozzle section **42a** of the scribing unit **40** is slid such that cooling water is sequentially sprayed onto the portions which have been bent by the pressing force of the pressing roller **32a.**

When the cooling water is sprayed onto the vicinity of the portions which are irradiated by a laser beam, the portions to be sprayed by the cooling water is bent downward. Therefore, a vertical crack which is formed, from a lower surface of the glass substrate **90,** by the irradiation of the laser beam and the spraying of the cooling water, extends upward and reaches near the upper surface of the glass substrate **90.**

Next, the glass substrate **90** is cut in the same manner as Embodiment 1.

According to the cutting apparatus according to Embodiment 5, the vertical crack formed right below the scribing line reaches near the upper surface of the glass substrate **90.** Therefore, the glass substrate **90** is positively cut after the breaking step which uses a roller according to the present application.

### <Embodiment 6>

In the cutting apparatus according to Embodiment 2 of the present invention, when a scribing line is formed on the glass substrate **90** by the cutter wheel tip **48a,** a pressing force of the pressing roller **32a** with respect to the glass substrate **90** is larger than that of the cutter wheel **48a** with respect to the glass substrate **90** when the pressing roller **32a** of the breaking unit **30** is pressed against the glass substrate **90.** In this manner, when the glass substrate **90** is scribed along the line to be scribed by the cutter wheel tip **48a,** the vertical crack right below the scribing line extends to reach the upper surface of the glass substrate **90** with the glass substrate **90** bent downward.

In the cutting apparatus according to Embodiment 1 of the present invention, when the scribing line is formed by the irradiation of the laser beam and the spraying of the cooling water, the glass substrate can be bent downward by pressing the pressing roller **32a** and the auxiliary roller **33a** on the pressing side, provided in the breaking unit **30,** against the glass substrate **90.**

### <Embodiment 7>

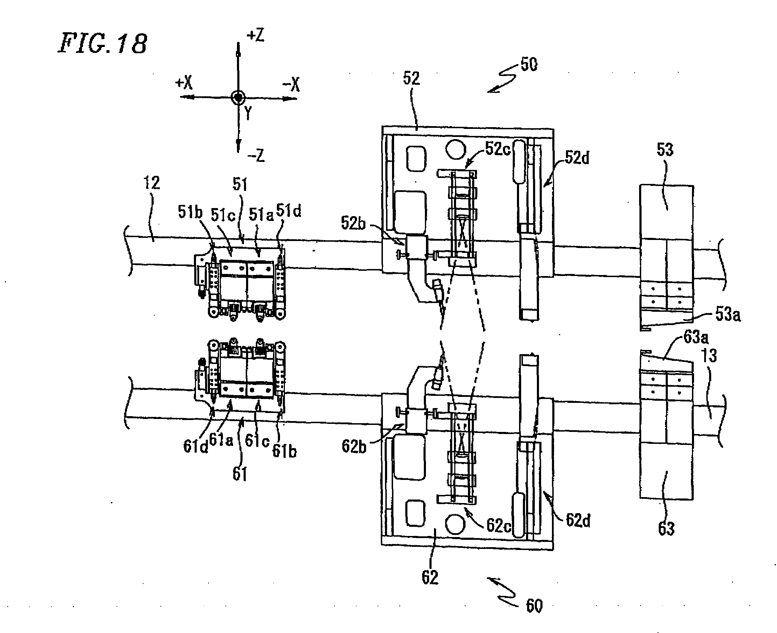

Figure **18** is a view schematically showing a structure of a cutting apparatus according to Embodiment 7.

The cutting apparatus according to Embodiment 7 is used for cutting a bonded glass substrate **91** for which a pair of glass substrates **90** is bonded.

The cutting apparatus according to Embodiment 7 includes a upper guide rail **12,** a first upper unit **51,** a second upper unit **52,** a third upper unit **53,** a lower guide rail **13,** a first lower unit **61,** a second lower unit **62** and a third lower unit **63.**

The first upper unit **51,** the second upper unit **52** and the third upper unit **53** are attached to the upper guide rail **12** so as to each separately slidable. The first lower unit **61,** the second lower unit **62** and the third lower unit 63 are attached to the lower guide rail **13** so as to each be separately slidable.

The first upper unit **51** includes a pressing roller mechanism **51a,** a first auxiliary roller mechanism **51b,** a substrate holding roller mechanism **51c** and a second auxiliary roller mechanism **51d.** The pressing roller mechanism **51a** has the same structure as that for the pressing roller mechanism **32** in the first upper unit **30a** according to Embodiment 3. The first auxiliary roller mechanism **51b** has the same structure as the first auxiliary roller mechanism **33** on the pressing side in the first upper unit **30a** according to Embodiment 3. The substrate holding roller mechanism **51c** is provided between the pressing roller mechanism **51a** and the first auxiliary roller mechanism **51b.** The substrate holding roller mechanism **51c** has the same structure as that for the substrate holding roller mechanism **45** according to Embodiment 3. The second auxiliary roller mechanism **51d** is provided on a side opposite to the substrate holding roller mechanism **51c** with respect to the pressing roller mechanism **51a.** The second auxiliary roller mechanism **51d** has the same structure as that for the first auxiliary roller mechanism **51b.**

The second upper unit **52** has a structure in which the second lower unit **40b** according to Embodiment 3 is inverted in a vertical direction. A cooling mechanism **52b,** a laser beam irradiating optical system **52c** and a notch forming cutter mechanism **52d** are provided in this order from the side of the first upper unit **51.**

A third upper unit **53** includes a laser beam/cooling water receiving section **53a** has a similar structure to that for the second upper unit **30b** according to Embodiment **3** does.

The first lower unit **61** has a structure in which the first upper unit **51** is inverted in vertical and horizontal directions. A second auxiliary roller mechanism **61d,** a pressing roller mechanism **61a,** a substrate holding roller mechanism **61c** and a first auxiliary roller mechanism **61b** are provided in this order from the side of the first auxiliary roller mechanism **51b.**

The second lower unit **62** has a similar structure to that for the second lower unit **40b** according to Embodiment 3. A cooling mechanism **62d,** a laser beam irradiating optical system **62c** and a notch forming cutter mechanism **62d** are provided in this order from the side of the first lower unit **61.**

The third lower unit **63** has a structure in which the third upper unit **53** is inverted in a vertical direction. The third lower unit **63** includes a laser beam/cooling water receiving section **63a.**

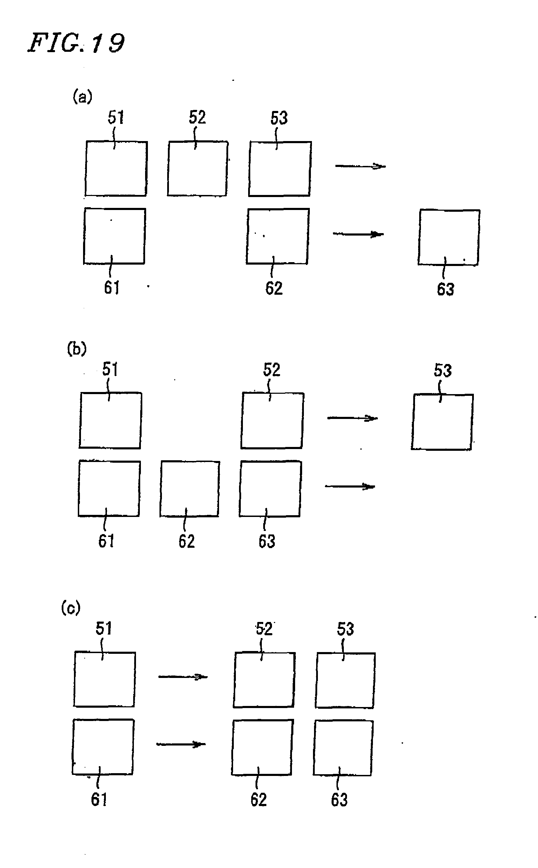

Figure **19** is a view for illustrating an operation of the cutting apparatus according to Embodiment 7.

Hereafter, the operation of the cutting apparatus according to Embodiment 7 will be described with reference to Figure **19.**

A scribing line is formed on a lower glass substrate of a bonded substrate. In order to form the scribing line, first, the third lower unit **63** is slid to a waiting position, which is ata side of an end face portion in a scribing direction (see Figure **19(a)),** and thereafter, the scribing line is formed on the lower glass substrate by using the second lower unit **62** and the third upper unit **53.** This method of forming a scribing line is the same as the method of forming a scribing line on the glass substrate **90** according to Embodiment 3.

Next, first, the third lower unit **53** in the upper unit **50** is slid to a waiting position which is a side of an end face portion in a scribing direction (see Figure **19(b)),** the scribing line is formed on the upper glass substrate by using the second upper unit **52** in the upper unit **50 and** the third lower unit **63** in the lower unit **60.** This method of forming a scribing line is the same as the method of forming a scribing line on the lower glass substrate.

Next, while the second upper unit **52** is slid to a side of the third upper unit **53** of a waiting position which is a side of an end face portion in the scribing direction, the second lower unit **62** is slid to a side of the third lower unit **63** of a waiting position which is a side of an end face portion in the scribing direction (see Figure **19(c)**). The first upper unit **51** and the first lower unit **61** oppose each other. At the same time, the first auxiliary roller mechanism **51b,** the substrate holding roller mechanism **51c**, the pressing roller mechanism **51a** and the second auxiliary roller mechanism **51d** respectively oppose the second auxiliary roller mechanism **61d,** the pressing roller mechanism **61a,** the substrate holding roller mechanism **61c** and the first auxiliary roller mechanism **61b** and are also respectively connected to the bonded substrate. The first upper unit **51** and the first lower unit **61** are slid in synchronization along the scribing line in the scribing direction.

According to Embodiment 7 of the present invention, when both sides of the scribing line formed on the upper glass substrate of the bonded glass substrate **91** is pressed by the pressing roller mechanism **61a** through the lower glass substrate, the upper glass substrate is cut along the scribing line. When both sides of the scribing line formed on the lower glass substrate are pressed by the pressing roller mechanism 51a through the upper glass substrate, the lower glass substrate is cut along the scribing line. Furthermore, when the upper glass substrate and the lower glass substrate are cut, the bonded substrate is pinched between the second auxiliary roller mechanism **51d** and the first auxiliary roller mechanism **61b** at a portion ahead of a scribing position in the scribing direction. Therefore, when each of the scribing lines on the upper glass substrate and the lower glass substrate is broken, occurrence of chippings, fractures, etc, is prevented since an unnecessary force does not work on each part in the bonded substrate to be broken.

Furthermore, the cut upper glass substrate and the cut lower glass substrate prevent the bonded substrate from bending since the first auxiliary roller mechanism **51b** and the second auxiliary roller mechanism **61d** hold the bonded substrate.

As described above, the bonded substrate is efficiently cut by using the cutting apparatus according to Embodiment 7.

According to the cutting apparatus of Embodiment 7, a pressing force upon a second surface of the bonded substrate, which opposes a first surface of the bonded substrate, is movable along the scribing line formed on the first surface of the bonded substrate while the first surface of the bonded substrate is held. In this manner, while the pressing force is moved along the scribing line formed on the first surface of the bonded substrate, a pressing force works on the second surface of the bonded substrate which opposes the first surface of the bonded substrate. Therefore, a bendingmoment which is generated when the scribing line is formed on the first surface of the bonded substrate and which positively extends a vertical crack extending from the surface of the first surface in the thickness direction of the bonded substrate can work on the brittle substrate to cut the bonded substrate.

### <Embodiment 8>

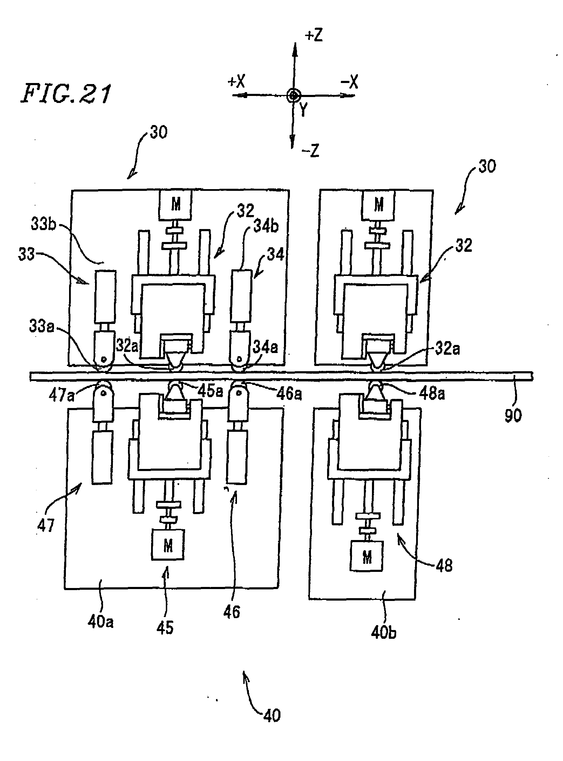

Figure **21** is a front view showing a structure of breaking units **30** and a scribing unit **40** provided in the cutting apparatus according to Embodiment 8 of the present invention.

The structure for the cutting apparatus according to Embodiment 8 is the same as that for Embodiment 4 except that the cutting apparatus according to Embodiment 8 uses two breaking units **30.**

In the cutting apparatus in Embodiment 8, when a scribing line is formed on a glass substrate **90,** a pressing roller and a cutter wheel tip **48a** are respectively pressed and rotated upon the upper surface and the lower surface along a line to be cut (line to be scribed). Thereby, a scribing line is formed on the glass substrate **90** along the line to be cut (line to be scribed).

At the same time, the first lower unit **40a** is slid below a pressing roller **32a** in the breaking unit **30** which is positioned at the end face position of the scribing line, so that the pressing roller **32a** and a substrate holding roller **45a** oppose each other with the glass substrate **90** therebetween.

While the pressing roller **32a** and the substrate holding roller **45a** are contacted to the glass substrate, a first auxiliary roller **33a** on the pressing side and a second auxiliary roller **47a** are respectively contacted to the glass substrate **90** and the second auxiliary roller on the pressing side and a first auxiliary roller **46a** are respectively contacted to the glass substrate **90.** The breaking units **30** and the first lower unit **40a** are slid in synchronization in the same direction (+X direction) as the scribing direction by cutter wheel tip **48a.**

According to Embodiment 8, the pressingmeans is moved along the scribing line while the holding means and the pressing means oppose each other with a brittle substrate therebetween and while a scribing forming means forms a scribing line on a scribing line forming surface of the brittle substrate. Therefore, a scribing step and a breaking step on the brittle substrate are approximately simultaneously performed. As a result, time of cutting step for the brittle substrate can be reduced.

In Embodiments 1 to 8 of the present invention, when a scribing line is formed on a glass substrate, the glass substrate is vibrated such that a vertical crack which constitutes the scribing line readily extends.

The first auxiliary roller mechanism **33** on the pressing side and the second auxiliary roller mechanism **34** on the pressing side, the first auxiliary roller mechanisms **46, 51b, 61b** and the second auxiliary roller mechanisms **47, 51c, 61c** can be omitted as appropriate according to the thickness and dimension of a glass substrate **90** which is intended to be broken.

As described above, the present invention is illustrated by using preferred embodiments of the present invention. However, the present invention is not limited to the embodiments. It is understood that the scope of the present invention is only construed by the scope of the claim. It is understood that those skilled in the art can arrive at an invention of an equivalent scope based on the description of the present invention and common general technical knowledge from the description of the specific preferred embodiments of the present invention. It is understood that the contents of the patent publications, the published applications and the documents cited in the present specification, and cited as references for the present application and are incorporated by reference herein.

### INDUSTRIAL APPLICABILITY

According to a brittle substrate cutting system and a brittle substrate cutting method of the present invention, a pressing force upon a second surface of a brittle substrate, which opposes a first surface of the brittle substrate, is moved along the scribing line formed on the first surface of the brittle substrate while the first surface of the brittle substrate is held. In this manner, while the pressing force is moved along the scribing line formed on the first surface of the brittle substrate, the pressing force can work on the second surface of the brittle substrate which opposes the first surface of the brittle substrate. Therefore, a bending moment, which positively extends a vertical crack extending from the scribing line in the thickness direction of the substrate, can work on the brittle substrate to cut the brittle substrate.

A combination of a holding means and a pressuring means can accurately cut a brittle substrate or a bonded substrate while the substrate is firmly held by a six-wheel roller or an eight-wheel roller.

## Claims

1. A brittle substrate cutting system comprising:
a scribing apparatus including a scribing line forming means for forming a scribing line on a first surface of a brittle substrate; and
a breaking apparatus for breaking the brittle substrate along the scribing line,
wherein the breaking apparatus includes a first pressing controlling means for moving a pressing force upon a second surface of the brittle substrate opposing the first surface of the brittle substrate along the scribing line while the first surface of the brittle substrate is held.

2. A brittle substrate cutting system according to claim 1, wherein the breaking apparatus further comprises:
a pressing means for pressing the second surface of the brittle substrate; and
a first holding means for holding the first surface of the brittle substrate,
wherein the first pressing controlling means controls the pressing means such that the pressing means moves along the scribing line while the first holding means and the pressing means oppose each other with the brittle substrate therebetween.

3. A brittle substrate cutting system according to claim 2, wherein the first pressing controlling means controls the pressing means such that the pressing means rolls along the scribing line.

4. A brittle substrate cutting system according to claim 3, wherein the pressing means is a roller.

5. A brittle substrate cutting system according to claim 3, wherein the pressing means is a conveyor.

6. A brittle substrate cutting system according to claim 3, wherein the pressing means is a bearing.

7. A brittle substrate cutting system according to claim 2, wherein a groove section is formed in the pressing means such that the pressing means does not contact with a line on the second surface of the brittle substrate, the line opposing the scribing line.

8. A brittle substrate cutting system according to claim 2, wherein the breaking apparatus further comprises a first holding controlling means for controlling the first holding means such that the first holding means moves along the scribing line while the first holding means and the pressing means oppose each other with the brittle substrate therebetween.

9. A brittle substrate cutting system according to claim 8, wherein the first holding controlling means controls the first holding means such that the first holding means rolls along the scribing line.

10. A brittle substrate cutting system according to claim 9, wherein the holding means is a roller.

11. A brittle substrate cutting system according to claim 9, wherein the holding means is a conveyor.

12. A brittle substrate cutting system according to claim 9, wherein the holding means is a bearing.

13. A brittle substrate cutting system according to claim 8, wherein a groove section is formed in the first holding means such that the first holding means does not contact with the scribing line.

14. A brittle substrate cutting system according to claim 13, wherein the width of the groove section formed in the first holdingmeans is larger than that of the pressing means.

15. A brittle substrate cutting system according to claim 2, wherein the pressing means further comprises a second holding means and a third holding means for moving along the scribing line in a first direction and for holding the brittle substrate, the second holding means and the third holding means being arranged in the first direction from the pressing means, and
the breaking apparatus further comprises a second holding controlling means for controlling the second holding means such that the second holding means moves on the first surface along the scribing line while the second holding means holds the brittle substrate, and controlling the third holding means such that the third holding means moves on the second surface along the scribing line while the third holding means holds the brittle substrate.

16. A brittle substrate cutting system according to claim 15, wherein the second holding controlling means controls the second holding means such that the first holding means and the second holding means move at a predetermined speed and the second holding controlling means controls the third holding means such that the third holding means and the pressing means move at the predetermined speed while the second holding means and the third holding means oppose each other with the brittle substrate therebetween.

17. A brittle substrate cutting system according to claim 2, wherein the pressing means further comprises a fourth holding means and a fifth holding means for moving along the scribing line in a first direction and for holding the brittle substrate, the fourth holding means and the fifth holding means being arranged in a direction opposite to the first direction from the pressing means.

18. A brittle substrate cutting system according to claim 1, wherein the scribing line forming means comprises a laser beam irradiating means for irradiating a laser beam on the first surface of the brittle substrate and a cooling means for cooling the vicinity of the portions of the first surface of the brittle substrate where the laser beam is irradiated by the laser beam irradiating means.

19. A brittle substrate cutting system according to claim 18, wherein the cooling means is a cooling nozzle, and the cooling nozzle cools the vicinity of the portions where the laser beam is irradiated by spraying a cooling medium on the first surface of the brittle substrate.

20. A brittle substrate cutting system according to claim 19, comprising a laser beam/cooling medium receiving section for receiving at least one of the laser beam irradiated by the laser beam irradiating means and the cooling medium sprayed by the cooling nozzle.

21. A brittle substrate cutting system according to claim 20, wherein the laser beam/cooling medium receiving section is movable separately from the pressing means.

22. A brittle substrate cutting system according to claim 19, wherein the cooling nozzle is movable along the scribing line.

23. A brittle substrate cutting system according to claim 18, wherein the scribing line forming means further comprises a notch forming cutter mechanism for forming a notch at a starting position of forming the scribing line on the first surface of the brittle substrate.

24. A brittle substrate cutting system according to claim 23, wherein the notch forming cutter mechanism is integrally movable with the laser beam irradiating means and the cooling means.

25. A brittle substrate cutting system according to claim 1, wherein the scribing line forming means is a cutter.

26. A brittle substrate cutting system according to claim 25, wherein the cutter is a disk-shaped cutter wheel tip, and an edge portion is formed in an outer circumferential edge of the cutter wheel tip.

27. A brittle substrate cutting system according to claim 26, wherein a plurality of recessed portions are formed in a ridge-shaped section of the edge portion with a predetermined distance.

28. A brittle substrate cutting system according to claim 25, wherein the cutter is movable separately from the pressing means.

29. A brittle substrate cutting system according to claim 2, wherein the first pressing controlling means controls the pressing means such that the pressing means moves along the scribing line while the first holding means and the pressing means oppose each other with the brittle substrate therebetween and while the scribing line forming means forms the scribing line on the first surface of the brittle substrate.

30. A brittle substrate cutting system according to claim 1, wherein the scribing apparatus comprises a scribing line forming means for forming the scribing line on the first surface of the brittle substrate while the first surface of the brittle substrate is held, and
the breaking apparatus further comprises a pressing means for pressing the second surface opposing the first surface of the brittle substrate.

31. A brittle substrate cutting system according to claim 1, wherein the brittle substrate is a bonded substrate obtained by bonding substrates,
the scribing apparatus comprises a first scribing forming means for forming a first scribing line on a first surface of the bonded substrate and a second scribing line forming means for forming a second scribing line on a second surface of the bonded substrate opposing the first surface of the bonded substrate,
the breaking apparatus breaks the bonded substrate along the first scribing line formed on the first surface of the bonded substrate by the first scribing line forming means and breaks the bonded substrate along the second scribing line formed on the second surface of the bonded substrate by the second scribing line forming means, and
the firstpressing controllingmeans moves a pressing force upon the second surface of the bonded substrate opposing the first surface of the bonded substrate along the scribing line while the first surface of the bonded substrate is held.

32. A brittle substrate cutting system according to claim 1, wherein the breaking apparatus comprises:
a first bonded substrate pressing means for pressing the first surface of the bonded substrate;
a secondbonded substrate pressing means for pressing the second surface of the bonded substrate;
a first bonded substrate holding means for holding the first surface of the bonded substrate;
a second bonded substrate holding means for holding the second surface of the bonded substrate;
a first controlling means for the pressing means for controlling the second bonded substrate pressing means such that the second bonded substrate pressing means moves along the first scribing line while the first bonded substrate holding means and the second bonded substrate pressing means oppose each other with the bonded substrate therebetween; and
a second controlling means for the pressing means for controlling the first bonded substrate pressing means such that the first bonded substrate pressing means moves along the second scribing line while the second bonded substrate holding means and the first bonded substrate pressing means oppose each other with the bonded substrate therebetween.

33. A brittle substrate cutting system according to claim 32, wherein the first controlling means for the pressing means controls the second bonded substrate pressing means such that the second bonded substrate pressing means rolls along the first scribing line, and
the second controlling means for the pressing means controls the first bonded substrate pressing means such that the first bonded substrate pressing means rolls along the second scribing line.

34. A brittle substrate cutting system according to claim 33, wherein the first bonded substrate pressing means and the second bonded substrate pressing means are rollers.

35. A brittle substrate cutting system according to claim 33, wherein the pressing means is a conveyor.

36. A brittle substrate cutting system according to claim 33, wherein the pressing means is a bearing.

37. A brittle substrate cutting system according to claim 32, wherein a first groove section is formed in the second bonded substrate pressing means such that the second bonded substrate pressing means does not contact with a line on the second surface of the bonded substrate, the line opposing the first scribing line, and
a second groove section is formed in the first bonded substrate pressing means such that the first bonded substrate pressing means does not contact with a line on the first surface of the bonded substrate, the line opposing the second scribing line.

38. A brittle substrate cutting system according to claim 32, wherein the breaking apparatus further comprises a first controlling means for the holding means for controlling the first bonded substrate holding means such that the first bonded substrate holding means moves along the first scribing line while the first bonded substrate holding means and the second bonded substrate pressing means oppose each other with the bonded substrate therebetween, and
a second controlling means for the holding means for controlling the second bonded substrate holding means such that the second bonded substrate holding means moves along the second scribing line while the second bonded substrate holding means and the first bonded substrate pressing means oppose each other with the bonded substrate therebetween.

39. A brittle substrate cutting system according to claim 38, wherein the first controlling means for the holding means controls the first bonded substrate holding means such that the first bonded substrate holding means rolls along the first scribing line, and
the second controlling means for the holding means controls the second bonded substrate holding means such that the second bonded substrate holding means rolls along the second scribing line.

40. A brittle substrate cutting system according to claim 39, wherein the first bonded substrate holding means and the second bonded substrate holding means are rollers.

41. A brittle substrate cutting system according to claim 39, wherein the first bonded substrate holding means and the second bonded substrate holding means are conveyors.

42. A brittle substrate cutting system according to claim 39, wherein the first bonded substrate holding means and the second bonded substrate holding means are bearings.

43. A brittle substrate cutting system according to claim 38, wherein a third groove section is formed in the first bonded substrate holding means such that the first bonded substrate holding means does not contact with the first scribing line, and
a fourth groove section is formed in the second bonded substrate holding means such that the second bonded substrate holding means does not contact with the second scribing line.

44. A brittle substrate cutting method according to claim 43, wherein the width of the third groove section formed in the first bonded substrate holding means is larger than that of the second bonded substrate pressing means, and the width of the fourth groove section formed in the second bonded substrate holding means is larger than that of the first bonded substrate pressing means.

45. A brittle substrate cutting method according to claim 32, wherein the first bonded substrate pressing means and the second substrate pressing means move in a first direction along the first scribing line and the second scribing line, and the brittle substrate cutting system further comprises a third bonded substrate holding means and a fourth bonded substrate holding means respectively for holding the brittle substrate in the first direction from the first bonded substrate pressing means and the second bonded substrate pressing means, and
the breaking apparatus further comprises a third controlling means for the holding means for controlling the third bonded substrate holding means such that the third bonded substrate holding means moves on the first surface along the first scribing line while the thirdbonded substrate holding means holds the bonded substrate, and controlling the fourth bonded substrate holdingmeans such that the fourth bonded substrate holding means moves on the second surface along the second scribing line while the fourth bonded substrate holding means holds the bonded substrate.

46. A brittle substrate cutting system according to claim 45, wherein the third controlling means for the holding means controls the third bonded substrate holding means such that the third bonded substrate holding means, the first bonded substrate holding means and the first bonded substrate pressing means move at a predetermined speed and the third controlling means for the holding means controls the fourth bonded substrate holding means such that the fourth bonded substrate holding means, the second bonded substrate holding means and the second bonded substrate pressing means move at the predetermined speed while the third bonded substrate holding means and the fourth bonded substrate holding means oppose each other with the bonded substrate therebetween.

47. A brittle substrate cutting system according to claim 32, wherein the first bonded substrate pressing means moves in the first direction along the second scribing line,
the second bonded substrate pressing means moves in the first direction along the first scribing line, and
the brittle substrate cutting system further comprises a fifth bonded substrate holding means and a sixth bonded substrate holding means respectively for holding the brittle substrate in a direction opposite to the first direction from the first bonded substrate pressing means and the second bonded substrate pressing means.

48. A brittle substrate cutting system according to claim 32, wherein the first controlling means for the pressing means controls the second bonded substrate pressing means such that the second bonded substrate pressing means moves along the first scribing line and the second controlling means for the pressing means controls the first bonded substrate pressing means such that the first bonded substrate pressing means moves along the second scribing line while the first bonded substrate holding means and the second bonded substrate pressing means oppose each other with the bonded substrate therebetween, the first scribing line formingmeans forms the first scribing line on the first surface of the bonded substrate, the second bonded substrate holding means and the first bonded substrate pressing means oppose each other with the bonded substrate therebetween and the second scribing line forming means forms the second scribing line on the second surface of the bonded substrate.

49. A brittle substrate cutting method, comprising the steps of:
(a) forming a scribing line on a first surface of a brittle substrate; and
(b) breaking the brittle substrate along the scribing line, and
the step (b) includes the step of:
(b-1) moving a pressing force upon a second surface of the brittle substrate opposing the first surface of the brittle substrate along the scribing line while the first surface of the brittle substrate is held.

50. A brittle substrate cutting method according to claim 49, wherein the step (b) is performed by a breaking apparatus for breaking the brittle substrate along the scribing line,
the breaking apparatus includes:
a pressing means for pressing the second surface of the brittle substrate; and
a first holding means for holding the first surface of the brittle substrate, and
the step (b-1) includes the step of moving the pressing means along the scribing line while the first holding means and the press ingmeans oppose each other with the brittle substrate therebetween.

51. A brittle substrate cutting method according to claim 50, wherein the step (b-1) includes the step of controlling the pressing means such that the pressing means rolls along the scribing line.

52. A brittle substrate cutting method according to claim 51 wherein the pressing means is a roller.

53. A brittle substrate cutting method according to claim 51 wherein the pressing means is a conveyor.

54. A brittle substrate cutting method according to claim 51 wherein the pressing means is a bearing.

55. A brittle substrate cutting method according to claim 50, wherein a groove section is formed in the pressing means such that the pressing means does not contact with a line on the second surface of the brittle substrate, the line opposing the scribing line.

56. A brittle substrate cutting method according to claim 50, wherein the step (b) further includes the step of:
(b-2) controlling the first holding means such that the first holding means moves along the scribing line while the first holding means and the pressing means oppose each other with the brittle substrate therebetween.

57. A brittle substrate cutting method according to claim 56, wherein the step (b-2) includes the step of controlling the first holding means such that the first holding means rolls along the scribing line.

58. A brittle substrate cutting method according to claim 57, wherein the holding means is a roller.

59. A brittle substrate cutting method according to claim 57, wherein the holding means is a conveyor.

60. A brittle substrate cutting method according to claim 57, wherein the holding means is a bearing.

61. A brittle substrate cutting method according to claim 56, wherein a groove section is formed in the first holding means such that the first holding means does not contact with the scribing line.

62. A brittle substrate cutting method according to claim 61, wherein the width of the groove section formed on the first holding means is larger than that of the pressing means.

63. A brittle substrate cutting method according to claim 50, wherein the pressing means moves along the scribing line in a first direction and further comprises a second holding means and a third holding means for holding the brittle substrate in the first direction from the pressing means,
the step (b) further includes the step of:
(b-3) controlling the second holding means such that the second holding means moves on the first surface along the scribing line while the second holding means holds the brittle substrate, and controlling the third holding means such that the third holding means moves on the second surface along the scribing line while the third holding means holds the brittle substrate.

64. A brittle substrate cutting method according to claim 63, wherein the step (b-3) includes the step of controlling the second holding means such that the first holding means and the second holding means move at a predetermined speed, and controlling the third holding means such that the third holding means and the pressing means move at the predetermined speed while the second holding means and the third holding means oppose each other with the brittle substrate therebetween.

65. A brittle substrate cutting method according to claim 2, wherein the pressing means moves in a first direction along the scribing line and further comprises a fourth holding means and a fifth holding means for holding the brittle substrate in a direction opposite to the first direction from the pressing means.

66. A brittle substrate cutting method according to claim 49, wherein the step (a) includes the steps of:
(a-1) irradiating a laser beam on the first surface of the brittle substrate; and
(a-2) cooling the vicinity of the portions of the first surface of the brittle substrate where the laser beam is irradiated by the laser beam irradiating means.

67. A brittle substrate cutting method according to claim 66, wherein the step (a-2) is performed by a cooling medium
the cooling means is a cooling nozzle, and the cooling nozzle cools the vicinity of the portions where the laser beam is irradiated, by spraying a cooling medium on the first surface of the brittle substrate.

68. A brittle substrate cutting method according to claim 67, wherein the step (a-1) is performed by a laser beam irradiating means and includes the step of receiving at least one of the laser beam irradiated by the laser beam irradiating means and the medium sprayed by the cooling nozzle.

69. A brittle substrate cutting method according to claim 68, wherein the step of receiving at least one of the laser beam irradiated by the laser beam irradiating means and the medium sprayed by the cooling nozzle is performed by a laser beam/cooling medium receiving section, and the laser beam/cooling medium receiving section is movable separately from the pressing means.

70. A brittle substrate cutting method according to claim 68, wherein the cooling nozzle is movable along the scribing line.

71. A brittle substrate cutting method according to claim 66, wherein the step (a) further includes the step of forming a notch at a starting position of forming the scribing line on the first surface of the brittle substrate.

72. A brittle substrate cutting method according to claim 71, wherein the step of forming a notch is performed by a notch forming cutter mechanism, and
the notch forming cutter mechanism is integrally movable with the laser beam irradiating means and the cooling means.

73. A brittle substrate cutting method according to claim 49, wherein the step (a) is performed by a scribing line forming means, and
the scribing line forming means is a cutter.

74. A brittle substrate cutting method according to claim 73, wherein the cutter is a disk-shaped cutter wheel tip, and an edge portion is formed in an outer circumferential edge of the cutter wheel tip.

75. A brittle substrate cutting method according to claim 74, wherein a plurality of recessed portions are formed in a ridge-shaped section of the edge portion with a predetermined distance.

76. A brittle substrate cutting method according to claim 73, wherein the cutter is movable separately from the pressing means.

77. A brittle substrate cutting method according to claim 50, wherein the step (b-1) controls the pressing means such that the pressing means moves along the scribing line while the first holding means and the pressing means oppose each other with the brittle substrate therebetween and while the scribing line forming means forms the scribing line on the first surface of the brittle substrate.

78. A brittle substrate cutting method according to claim 49, wherein the step (a) further includes the step of forming the scribing line on the first surface of the brittle substrate while the first surface of the brittle substrate is held, and
the step (b) further includes the step of pressing a second surface opposing the first surface of the brittle substrate.

79. A brittle substrate cutting method according to claim 49, wherein the brittle substrate is a bonded substrate obtained by bonding substrates,
the scribing apparatus comprises a first scribing forming means for forming a first scribing line on a first surface of the bonded substrate and a second scribing line forming means for forming a second scribing line on a second surface of the bonded substrate opposing the first surface of the bonded substrate,
the step (b-1) includes the steps of:
breaking the bonded substrate along the first scribing line formed on the first surface of the bonded substrate by the first scribing line forming means and breaking the bonded substrate along the second scribing line formed on the second surface of the bonded substrate by the second scribing line forming means, and
moving a pressing force upon the second surface of the bonded substrate opposing the first surface of the bonded substrate along the scribing line while the first surface of the bonded substrate is held.

80. A brittle substrate cutting method according to claim 49, wherein the step (b) is performed by a breaking apparatus for breaking the brittle substrate along the scribing line,
the breaking apparatus includes:
a first bonded substrate pressing means for pressing the first surface of the bonded substrate;
a second bonded substrate pressingmeans for pressing the second surface of the bonded substrate;
a first bonded substrate holding means for holding the first surface of the bonded substrate; and
a second bonded substrate holding means for holding the second surface of the bonded substrate,
the step (b-1) includes the steps of:
controlling the second bonded substrate pressing means such that the second bonded substrate pressing means moves along the first scribing line while the first bonded substrate holding means and the second bonded substrate holding means oppose each other with the bonded substrate therebetween; and
controlling the first bonded substrate pressing means such that the first bonded substrate pressing means moves along the second scribing line while the second bonded substrate holding means and the first bonded substrate holding means oppose each other with the bonded substrate therebetween.

81. A brittle substrate cutting method according to claim 80, wherein the step (b-1) includes the steps of:
controlling the second bonded substrate pressing means such that the second bonded substrate pressing means rolls along the first scribing line; and
controlling the first bonded substrate pressing means such that the first bonded substrate pressing means rolls along the second scribing line.

82. A brittle substrate cutting method according to claim 81, wherein the first bonded substrate pressing means and the second bonded substrate pressing means are rollers.

83. A brittle substrate cutting method according to claim 81, wherein the pressing means is a conveyor.

84. A brittle substrate cutting method according to claim 81, wherein the pressing means is a bearing.

85. A brittle substrate cutting method according to claim 80, wherein a first groove section is formed in the second bonded substrate pressing means such that the second bonded substrate pressing means does not contact with a line on the second surface of the bonded substrate, the line opposing the first scribing line, and
a second groove section is formed in the first bonded substrate pressing means such that the first bonded substrate pressing means does not contact with a line on the first surface of the bonded substrate, the line opposing the second scribing line.

86. A brittle substrate cutting method according to claim 80, wherein the step (b) further includes the steps of:
(b-2) controlling the first bonded substrate holding means such that the first bonded substrate holding means moves along the first scribing line while the first bonded substrate holding means and the second bonded substrate pressing means oppose each other with the bonded substrate therebetween, and controlling the second bonded substrate holding means such that the second bonded substrate holding means moves along the second scribing line while the second bonded substrate holdingmeans and the first bonded substrate pressing means oppose each other with the bonded substrate therebetween.

87. A brittle substrate cutting method according to claim 86, wherein the step (b-2) includes the step of controlling the first bonded substrate holding means such that the first bonded substrate holding means rolls along the first scribing line, and controlling the second bonded substrate holding means such that the second bonded substrate holding means rolls along the second scribing line.

88. A brittle substrate cutting method according to claim 87, wherein the first bonded substrate holding means and the second bonded substrate holding means are rollers.

89. A brittle substrate cutting method according to claim 87, wherein the first bonded substrate holding means and the second bonded substrate holding means are conveyors.

90. A brittle substrate cutting method according to claim 87, wherein the first bonded substrate holding means and the second bonded substrate holding means are bearings.

91. A brittle substrate cutting method according to claim 86, wherein a third groove section is formed in the first bonded substrate holding means such that the first bonded substrate holding means does not contact with the first scribing line, and
a fourth groove section is formed in the second bonded substrate holding means such that the second bonded substrate holding means does not contact with the second scribing line.

92. A brittle substrate cutting method according to claim 91, wherein the width of the third groove section formed in the first bonded substrate holding means is larger than that of the second bonded substrate pressing means, and the width of the fourth groove section formed in the second bonded substrate holding means is larger than that of the first bonded substrate pressing means.

93. A brittle substrate cutting method according to claim 80, wherein the first bonded substrate pressing means and the second substrate pressing means respectively move in a first direction along the first scribing line and the second scribing line, and the brittle substrate cutting method further comprises the use of a third bonded substrate holding means and a fourth bonded substrate holding means respectively for holding the brittle substrate in the first direction from the first bonded substrate pressing means and the second bonded substrate pressing means,
the step (b) further includes the step of:
(b-3) controlling the third bonded substrate holding means such that the third bonded substrate holding means moves on the first surface along the first scribing line while the third bonded substrate holding means holds the bonded substrate, and controlling the fourth bonded substrate holding means such that the fourth bonded substrate holding means moves on the second surface along the second scribing line while the fourth bonded substrate holding means holds the bonded substrate.

94. A brittle substrate cutting method according to claim 93, wherein the step (b-3) includes the step of:
controlling the third bonded substrate holding means such that the third bonded substrate holding means, the first bonded substrate holdingmeans and the first bonded substrate pressing means move at a predetermined speed and the third controlling means for the holding means controls the fourth bonded substrate holding means such that the fourth bonded substrate holding means, the second bonded substrate holding means and the second bonded substrate pressing means move at the predetermined speed while the third bonded substrate holding means and the fourth bonded substrate holding means oppose each other with the bonded substrate therebetween.

95. A brittle substrate cutting method according to claim 80, wherein the first bonded substrate pressing means moves in the first direction along the second scribing line,
the second bonded substrate pressing means moves in the first direction along the first scribing line,
the brittle substrate cutting method further comprises the use of a fifth bonded substrate holding means and a sixth bonded substrate holding means respectively for holding the brittle substrate in a direction opposite to the first direction from the first bonded substrate pressing means and the second bonded substrate pressing means.

96. A brittle substrate cutting method according to claim 80, comprising the step of controlling the second bonded substrate pressing means such that the second bonded substrate pressing means moves along the first scribing line and controlling the first bonded substrate pressing means such that the first bonded substrate pressing means moves along the scribing line while the first bonded substrate holding means and the second bonded substrate pressing means oppose each other with the bonded substrate therebetween, the first scribing line formingmeans forms the first scribing line on the first surface of the bonded substrate, the second bonded substrate holding means and the first bonded substrate pressing means oppose each other with the bonded substrate therebetween and the second scribing line forming means forms the second scribing line on the second surface of the bonded substrate.
